# EUROPEAN PATENT SPECIFICATION

(11) **EP 3 822 182 B1**
(45) Date of publication and mention of the grant of the patent: **20.04.2022**
(21) Application number: 20208485.1
(22) Date of filing: 18.11.2020
(51) Int. Cl.: B65B 43/50, A24F 40/70, B65G 47/82, B65G 47/84

(54) **MANUFACTURING MACHINE AND MANUFACTURING METHOD FOR THE PRODUCTION OF DISPOSABLE CARTRIDGES**
HERSTELLUNGSMASCHINE UND VERFAHREN ZUR HERSTELLUNG VON EINWEGKARTUSCHEN
MACHINE DE FABRICATION ET PROCÉDÉ DE FABRICATION POUR LA PRODUCTION DE CARTOUCHES JETABLES

(30) Priority: 18.11.2019 IT 201900021369
(43) Date of publication of application: 19.05.2021
(73) Proprietor: G.D SOCIETA' PER AZIONI, 40133 Bologna (IT)
(72) Inventor: MILANDRI, Francesco, 40133 Bologna (IT); GROSSO, Daniele, 40133 Bologna (IT); LEGNANI, Mirco, 40133 Bologna (IT); LANZARINI, Luca, 40133 Bologna (IT)
(74) Representative: Maccagnan, Matteo

(56) References cited:
- WO-A2-2019/043665
- US-A1- 2011 146 840

## Description

### CROSS-REFERENCE TO RELATED APPLICATIONS

This patent application claims priority from Italian patent application no. 102019000021369 filed on 18/11/2019.

### TECHNICAL FIELD

The present invention relates to a manufacturing machine and to a manufacturing method for the production of disposable cartridges.

The present invention is advantageously applied for the production and packaging of disposable cartridges for electronic cigarettes to which the following disclosure will make explicit reference without losing generality.

### PRIOR ART

With reference to the patent application WO2019081568A1, disposable (i.e. single use) cartridges for electronic cigarettes have recently been proposed comprising a tubular casing made of tubular-shaped plastic material (having an elliptical cross-section) inside which a quantity of powdered tobacco is contained which is enclosed between two micro-perforated walls: a lower micro-perforated wall is integrated from the beginning in the tubular casing while an upper micro-perforated wall is fixed to the tubular casing after the insertion of the powdered tobacco.

The production of said cartridges provides for filling each tubular casing with a calibrated quantity of powdered tobacco through an open upper end of the tubular casing and then capping the tubular casing by applying the micro-perforated upper wall to the open upper end. The cartridges are subsequently weighed individually to allow the non-compliant ones that contain an insufficient or excessive quantity of tobacco powder to be rejected.

Once the production of the cartridges is finished, the latter are placed inside sealed packs, typically blister packs.

The patent applications WO2017051348A1, WO2017051349A1 and WO2017051350A1 provide an example of a manufacturing machine for the production of disposable cartridges for electronic cigarettes. This manufacturing machine is designed to operate efficiently (i.e. with a high hourly production rate, in terms of number of cartridges produced per time unit) and effectively (i.e. with a modest number of rejected pieces and with a high final quality); however, the electronic cigarettes that use the cartridge described above are experiencing considerable market success and therefore the manufacturers of the cartridges described above require an even higher performing manufacturing machine, i.e. with a higher hourly production rate, compared to the known manufacturing machine described in the patent applications WO2017051348A1, WO2017051349A1 and WO2017051350A1.

The patent application WO2019043665A2 describes a manufacturing machine for the production of disposable cartridges for electronic cigarettes and comprising: a first manufacturing drum which supports a plurality of first groups of first seats, each designed to accommodate a corresponding tubular casing; a second manufacturing drum which supports a plurality of second groups of second seats, each designed to accommodate a corresponding tubular casing; an inlet unit that feeds the tubular casings into all the first seats of a first group standing still in a feeding station; at least one filling unit which feeds the quantities of tobacco into the tubular casings carried by the first seats of a first group standing still in a filling station; and a transfer unit which simultaneously transfers all the tubular casings from all the first seats of a first group standing still in a transfer station to the corresponding second seats of a second group, which is standing still in the transfer station.

### DESCRIPTION OF THE INVENTION

The purpose of the present invention is to provide a manufacturing machine and a manufacturing method for the production of disposable cartridges, which manufacturing machine and manufacturing method allow to achieve high productivity while ensuring high-quality standards and are, at the same time, easy and inexpensive to produce.

According to the present invention, a manufacturing machine and a manufacturing method are provided for the production of disposable cartridges, as claimed in the appended claims.

The claims describe preferred embodiments of the present invention forming an integral part of the present description.

### BRIEF DESCRIPTION OF THE DRAWINGS

The present invention will now be described with reference to the attached drawings, which illustrate a non-limiting embodiment thereof, wherein:
- Figure 1 is a front view of a cartridge for an electronic cigarette;
- Figure 2 is a longitudinal section along the line II-II of the cartridge for an electronic cigarette of Figure 1;

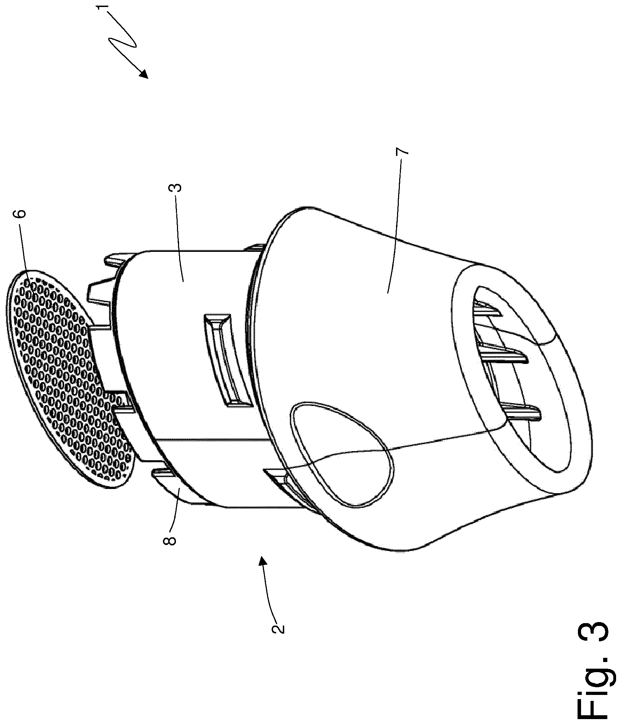

- Figure 3 is a partially exploded and perspective view of the cartridge for an electronic cigarette of Figure 1;
- Figure 4 is a longitudinal sectional view on an enlarged scale of a detail of the cartridge for an electronic cigarette of Figure 1;
- Figure 5 is a schematic and plan view of part of a manufacturing machine that produces the cartridge for an electronic cigarette of Figure 1;
- Figure 6 is a perspective view and with parts removed for clarity of a feeding unit for tubular casings of the manufacturing machine of Figure 5;
- Figure 7 is a plan view of two trays used in the feeding unit of Figure 6;
- Figures 8a and 8b are two views on an enlarged scale of two different details of the feeding unit of Figure 6;
- Figure 9 is a schematic view of a transfer drum of the feeding unit of Figure 6;
- Figures 10, 11 and 12 schematically illustrate the operation of a filling unit of the manufacturing machine of Figure 5;
- Figure 13 is a schematic and longitudinal sectional view of a transfer unit of the manufacturing machine of Figure 5;
- Figure 14 is a plan view of a sheet containing a plurality of micro-perforated upper walls to be applied to corresponding tubular casings filled with a quantity of powdered tobacco;
- Figure 15 is an enlarged scale view of a detail of Figure 14;
- Figures 16-19 schematically illustrate the operation of a unit for feeding the micro-perforated upper walls of the manufacturing machine of Figure 5;
- Figure 20 is a perspective view of a detail of the feeding unit of Figures 16-19;
- Figures 21 and 22 are two perspective views of the cartridge for an electronic cigarette of Figure 1 with locking teeth in the raised position and in the lowered position, respectively;
- Figures 23 and 24 schematically illustrate the operation of a first bending station of a unit for closing the locking teeth of the manufacturing machine of Figure 5;
- Figures 25 and 26 are two perspective views of respective embodiments of an element of the first bending station of Figures 23 and 24;
- Figures 27 and 28 schematically illustrate the operation of a second bending station of the unit for closing the locking teeth;
- Figure 29 schematically illustrates a cooling station of the unit for closing the locking teeth;
- Figure 30 is a perspective and schematic view of a control conveyor of the manufacturing machine of Figure 5;
- Figures 31-37 schematically illustrate the operation of a controlling unit arranged along the control conveyor of Figure 30;
- Figure 38 schematically illustrates a transfer unit of the manufacturing machine of Figure 5 arranged at the end of the control conveyor of Figure 30;
- Figures 39-46 schematically illustrate the operation of the transfer unit of Figure 38;
- Figures 47 and 48 are two different perspective and schematic views of the transfer unit of Figure 38;
- Figures 49 and 50 are two different perspective views of an intermediate store arranged downstream of the manufacturing machine of Figure 5;
- Figure 51 is a plan view of a tray of the intermediate store of Figures 49 and 50;
- Figure 52 is a perspective view of a blister pack containing three cartridges for an electronic cigarette of Figure 1;
- Figure 53 is a plan and schematic view of an inlet conveyor of a packaging (blistering) machine which receives the cartridges for an electronic cigarette from the intermediate store of Figures 49 and 50; and
- Figure 54 is a plan view of a tray of the inlet conveyor of Figure 53.

### BEST MODE FOR CARRYING OUT THE INVENTION

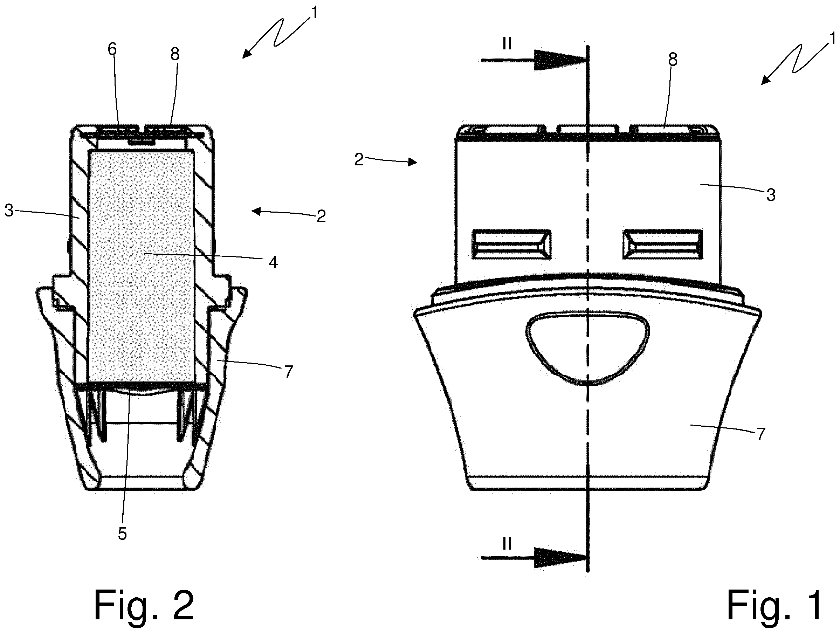

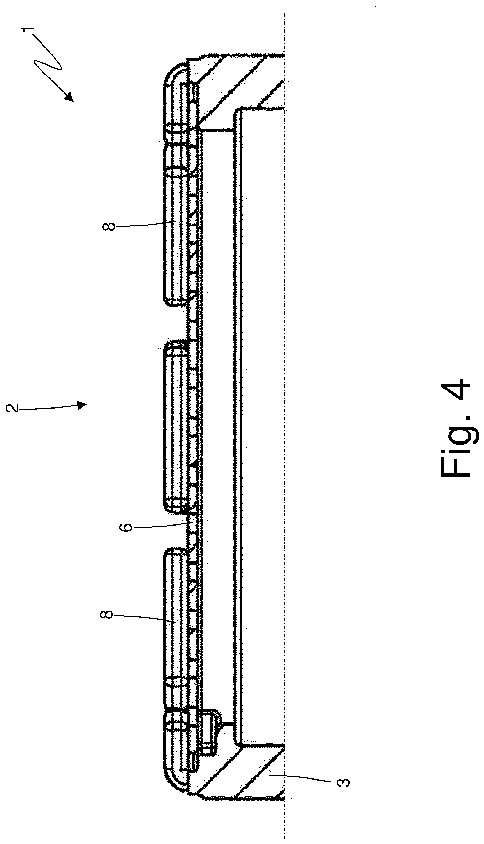

In figures 1, 2 number 1 denotes as a whole a disposable cartridge for electronic cigarettes. The disposable cartridge 1 comprises a tubular casing 2 made of plastic material which is provided with a substantially cylindrical-shaped side wall 3 and having an elliptical cross-section; inside the tubular casing 2 a quantity 4 of powdered tobacco is provided, which is enclosed between two micro-perforated walls 5 and 6: a micro-perforated lower wall 5 is integrated from the start in the tubular casing 2 while an upper micro-perforated wall 6 is fixed to the tubular casing 2 after the insertion of the quantity 4 of powdered tobacco. A hollow insert is coupled to the tubular casing 2 which has a truncated conical shape (always with an elliptical cross-section). As better illustrated in Figure 4, the upper edge of the tubular casing 2 has a plurality of locking teeth 8 which are deformed to block the upper wall 6.

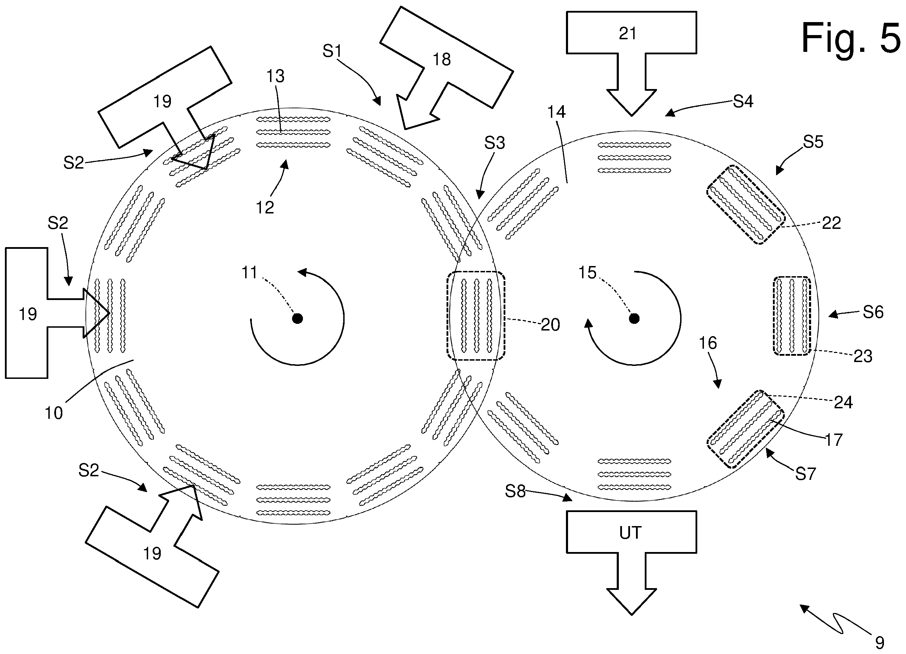

In Figure 5, number 9 denotes as a whole a manufacturing machine (only partially illustrated) for the production of the disposable cartridges 1 described above. The manufacturing machine 9 performs an intermittent movement, i.e., its conveyors cyclically alternate motion steps and still steps.

As illustrated in Figure 5, the manufacturing machine 9 comprises a manufacturing drum 10 which is arranged horizontally and is mounted so as to rotate, in a stepped manner, around a vertical rotation axis 11; in other words, the manufacturing drum 10 is rotated with an intermittent motion, i.e., a non-continuous motion which provides a cyclical alternation of motion steps, wherein the manufacturing drum 10 is moving, and of still steps, wherein the manufacturing drum 10 stops. The manufacturing drum 10 supports twelve groups 12 of seats 13, each of which is designed to receive and hold a corresponding tubular casing 2; in particular, each group 12 comprises forty-two seats 13 aligned along three straight lines parallel to one another (each of the three straight lines has fourteen seats 13) and the twelve groups 12 are arranged so as to define, in plan, a regular polygon (i.e., a dodecahedron) on the surface of the manufacturing drum 10.

The manufacturing machine 9 comprises a further manufacturing drum 14 which is arranged horizontally alongside the manufacturing drum 10 and is mounted so as to rotate, in a stepped manner, around a vertical rotation axis 15 parallel to the rotation axis 11; in other words, the manufacturing drum 14 is rotated with an intermittent motion, i.e., a non-continuous motion which provides a cyclical alternation of motion steps, wherein the manufacturing drum 14 is moving, and still steps, wherein the manufacturing drum 14 stops. The manufacturing drum 14 supports twelve groups 16 of seats 17, each of which is designed to receive and hold a corresponding tubular casing 2; in particular, each group 16 comprises forty-two seats 17 aligned along three straight lines parallel to one another (each of the three straight lines has fourteen seats 17) and the twelve groups 16 are arranged so as to define, in plan, a regular polygon (i.e., a dodecahedron) on the surface of the manufacturing drum 14.

According to a different embodiment not illustrated, each group 12/16 of seats 13/16 has a number of seats 13/16 other than forty-two; for example, each group 12/16 of seats 13/16 could have a total of twenty-four seats 13/16 arranged on three parallel rows of eight seats 13/16 each. According to a different embodiment not illustrated, each group 12/16 of seats 13/16 has a different arrangement of the seats 13/16 with respect to what is illustrated in the attached figures. For example, eight groups 12/16 of seats 13/16 could be provided to define an octagon, in plan, instead of twelve groups 12/16 of seats 13/16 arranged to define a dodecahedron, in plan.

The manufacturing machine 9 comprises a feeding station S1, in which a feeding unit 18 inserts a corresponding empty tubular casing 2 into each seat 13 of a group 12, that is standing still; in particular, the feeding unit 18 simultaneously inserts forty-two empty tubular casings 2 in as many seats 13 of a group 12 that is standing still in the feeding station S1. Downstream of the feeding station S1, relative to the rotation direction of the manufacturing drum 10, three filling stations S2 are arranged in succession in each of which a filling unit 19 is arranged, which feeds into some tubular casings 2 carried by seats 13 of a group 12 standing still, a corresponding quantity 4 of tobacco; in particular, each filling unit 19 simultaneously feeds fourteen quantities 4 of tobacco into as many seats 13 of a group 12 standing still in the filling station S2. The filling unit 19 of the first filling station S2 feeds fourteen quantities 4 of tobacco into as many seats 13 in the innermost row of the group 12 standing still in the first filling station S2, the filling unit 19 of the second filling station S2 feeds fourteen quantities 4 of tobacco into as many seats 13 of the intermediate row of the group 12 standing still in the second filling station S2, and the filling unit 19 of the third filling station S2 feeds fourteen quantities 4 of tobacco into as many seats 13 of the outermost row of the group 12 standing still in the third filling station S2.

Downstream of the filling stations S2 (i.e. downstream of the last filling station S2), relative to the rotation direction of the manufacturing drum 10, a transfer station S3 is arranged, in which a transfer unit 20 transfers the tubular casings 2 (each containing a quantity 4 of tobacco) from the seats 13 of a group 12 of the manufacturing drum 10 to the seats 17 of a group 16 of the manufacturing drum 14; in particular, the transfer unit 20 simultaneously transfers forty-two tubular casings 2 from as many seats 13 of a group 12 standing still in the transfer station S3 to as many seats 17 of a group 16 standing still in the transfer station S3. In the transfer station S3, the two manufacturing drums 10 and 14 are partially overlapped, so that the seats 13 of a group 12 of the manufacturing drum 10 are vertically aligned with the seats 17 of a group 16 of the manufacturing drum 14; consequently, in the transfer station S3 the transfer of the tubular casings 2 takes place by means of a linear and vertical movement (i.e. an upward movement of the tubular casings 2 if the manufacturing drum 10 is arranged under the manufacturing drum 14 or a downward movement of the tubular casings 2 if the manufacturing drum 10 is arranged above the manufacturing drum 14).

Downstream of the transfer station S3, relative to the rotation direction of the manufacturing drum 14, a feeding station S4 is arranged, in which a feeding unit 21 feeds, into each tubular casing 2 carried by a seat 17 of a group 16, standing still, a corresponding upper wall 6; in particular, the feeding unit 21 simultaneously feeds forty-two upper walls 6 to as many tubular casings 2 carried by the seats 17 of a group 16 that is standing still in the feeding station S4. Downstream of the feeding station S4, relative to the rotation direction of the manufacturing drum 14, an initial bending station S5, a final bending station S6 and a cooling station S7 are arranged in succession: in the initial bending station S5 a bending unit 22 bends, by approximately 45°, the locking teeth 8 of the tubular casings 2 carried by the seats 17 of a unit 16 standing still in the initial bending station S5, in the final bending station S6 a bending unit 23 bends, by approximately 90°, the locking teeth 8 of the tubular casings 2 carried by the seats 17 of a group 16 standing still in the final bending station S6, and in the cooling station S7 a cooling unit 24 cools the locking teeth 8 of the tubular casings 2 carried by the seats 17 of a group 16 that is standing still in the cooling station S7.

According to a different embodiment, the cooling station S7 is replaced with a further heated bending station.

In the bending stations S5 and S6, the creation of disposable cartridges 1 is completed, i.e., downstream of the bending stations S5 and S6 the disposable cartridges 1 are finished and ready for use. Downstream of the cooling station S7, relative to the rotation direction of the manufacturing drum 14, a transfer station S8 is arranged, in which a transfer unit UT extracts a corresponding disposable cartridge 1 from each seat 17 of a group 16 that is standing still; in particular, the transfer unit UT simultaneously extracts forty-two disposable cartridges 1 from as many seats 17 of a group 16 standing still in the transfer station S8.

From the above, it is evident that all the steps of the production process of the disposable cartridges 1 (such as, for example, the filling of the quantities 4 of tobacco, the feeding of the upper walls 6, the bending of the locking teeth 8) contained in the seats 13/17 of a same group 12/16 are performed in parallel, i.e., they take place simultaneously for a plurality of disposable cartridges 1 contained in the seats 13/17 of a same group 12/16.

According to a preferred embodiment, each seat 13/17 of the manufacturing drum 10/14 comprises a through housing channel which crosses the manufacturing drum 10/14 from side to side and is designed to contain a tubular casing 2; in particular, each housing channel is transversely wider than a tubular casing 2 so as to allow the tubular casing 2 to pass through the entire housing channel (each tubular casing 2 enters the corresponding housing channel from the bottom and exits the corresponding housing channel from the top). Each seat 13/17 of the manufacturing drum 10/14 further comprises a pair of opposing jaws, which are mounted in the housing channel and are movable between a pick-up position, in which they engage a tubular casing 2 arranged in the housing channel (therefore preventing the tubular casing 2 from descending by gravity through the housing channel) and a transfer position, in which they do not engage a tubular casing 2 arranged in the housing channel (thus allowing the free sliding of the tubular casing 2 along the housing channel). According to a possible embodiment, the axial length of each housing channel is (slightly) greater than the axial length of the tubular casings 2 and therefore the tubular casings 2 are completely contained (without any protrusion) in the housing channels; according to other embodiments not illustrated and perfectly equivalent, the axial length of each housing channel is well above the axial length of the tubular casings 2 or the axial length of each housing channel is (slightly or much) smaller than the axial length of the tubular casings 2 (in the latter case the tubular casings 2 are not completely contained in the housing channels and therefore protrude from the top and/or from the bottom of the housing channels).

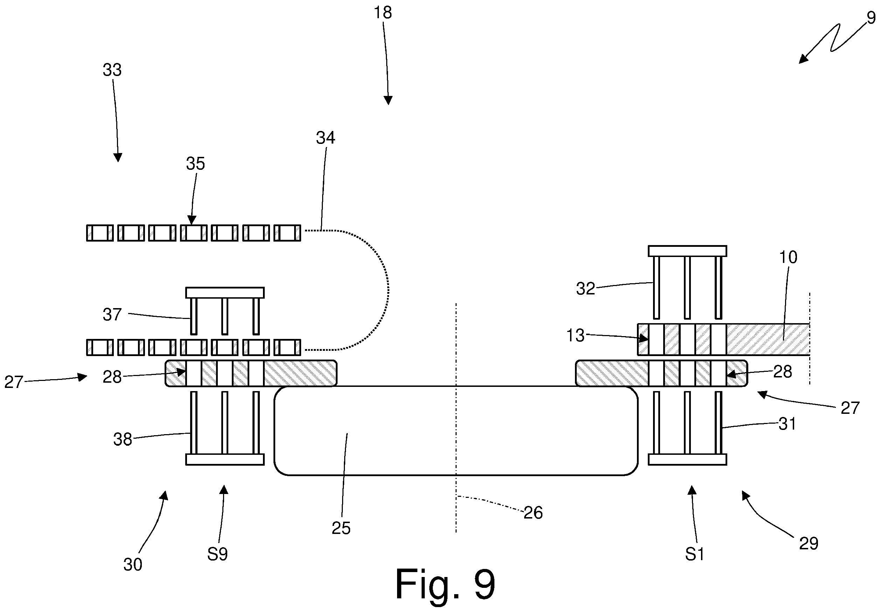

As illustrated in Figure 9, the feeding unit 18 comprises a feeding drum 25 which is arranged horizontally and is mounted so as to rotate, in a stepped manner, around a vertical rotation axis 26; in other words, the feeding drum 25 is rotated with an intermittent motion, i.e., a non-continuous motion which provides a cyclical alternation of motion steps, wherein the feeding drum 25 is moving, and still steps, wherein the feeding drum 25 stops. The feeding drum 25 supports two groups 27 of seats 28, each of which is designed to receive and hold a corresponding tubular casing 2; in particular, each group 27 comprises a plurality of seats 28 aligned along three straight lines parallel to one another (each of the three straight lines has fourteen seats 28) and the two groups 27 are arranged at approximately 150° one from the other (consequently at each step the feeding drum 25 rotates by 150° or by 210°). Each group 27 of seats 28 of the feeding drum 25 has the same identical shape as a group 12 of seats 13 of the manufacturing drum 10 and at the feeding station S1 the feeding drum 25 is partially overlapping the manufacturing drum 10; in this way, in the feeding station S1 each seat 28 of the feeding drum 25 is vertically aligned with a corresponding seat 13 of the manufacturing drum 10 (and vice versa).

According to a preferred embodiment, the feeding drum 25 comprises a cylindrical-shaped central body which supports two opposite plates (partially and radially projecting from the central body), in each of which, a respective group 27 of seats 28 is obtained.

A transfer device 29 is arranged in the feeding station S1, which is designed to transfer the tubular casings 2 from the seats 28 of the feeding drum 25 to the seats 13 of the manufacturing drum 10 by means of a vertical movement. Similarly, a transfer device 30 is arranged in a transfer station S9 opposite the feeding station S1, which is designed to transfer the tubular casings 2 to the seats 28 of the feeding drum 25 by means of a vertical movement. In particular, the transfer station S9 is arranged at approximately 150° - 180° from the feeding station S1.

In the feeding station S1, the two drums 10 and 25 are partially overlapped, so that the seats 13 of a group 12 of the manufacturing drum 10 are vertically aligned with the seats 28 of a group 27 of the feeding drum 25; consequently, in the feeding station S1 the transfer of the tubular casings 2 takes place by means of a linear and vertical movement; in particular, in the feeding station S1 the transfer of the tubular casings 2 takes place by means of an upward movement of the tubular casings 2 since the manufacturing drum 10 is arranged above the feeding drum 25.

As illustrated in Figure 9, the seats 13 of a group 12 standing still in the feeding station S1 are vertically aligned with the corresponding seats 28 of a group 27 standing still in the feeding station S1. The transfer device 29 comprises a group of pushing members 31 which are arranged in the feeding station S1 and are vertically movable so as to be inserted into the seats 28 of a group 27 standing still in the feeding station S1 and therefore push the tubular casings 2 from the seats 28 of a group 27, standing still in the feeding station S1, to the seats 13 of a group 12 standing still in the feeding station S1; moreover, the transfer unit 30 comprises a group of accompanying members 32 which are opposite the pushing members 31 and are vertically movable to accompany the ascent of the tubular casings 2 from the seats 28 of the feeding drum 25 to the seats 13 of the manufacturing drum 10.

In other words, in the feeding station S1 each tubular casing 2 is transferred from a seat 28 of a group 27 standing still in the feeding station S1 to the overlying seat 13 of a group 12 standing still in the feeding station S1 thus making a vertical upward movement during which the tubular casing 2 is engaged at the bottom by a pushing member 31 and at the top by an accompanying member 32 (i.e. it is *"pinched"* between a pushing member 31 arranged below and by an accompanying member 32 arranged above). In this regard, it is important to note that accompanying members 32 would not be strictly necessary; however, the presence of the accompanying members 32 allows to impart a controlled movement to the tubular casings 2, which prevents any mispositioning or rebound of the tubular casings 2.

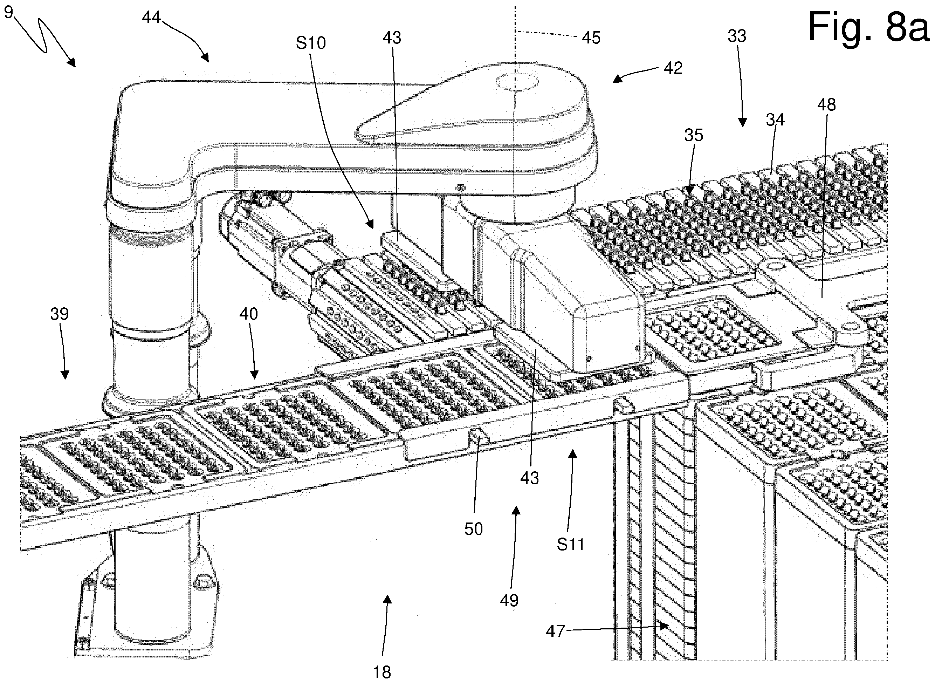

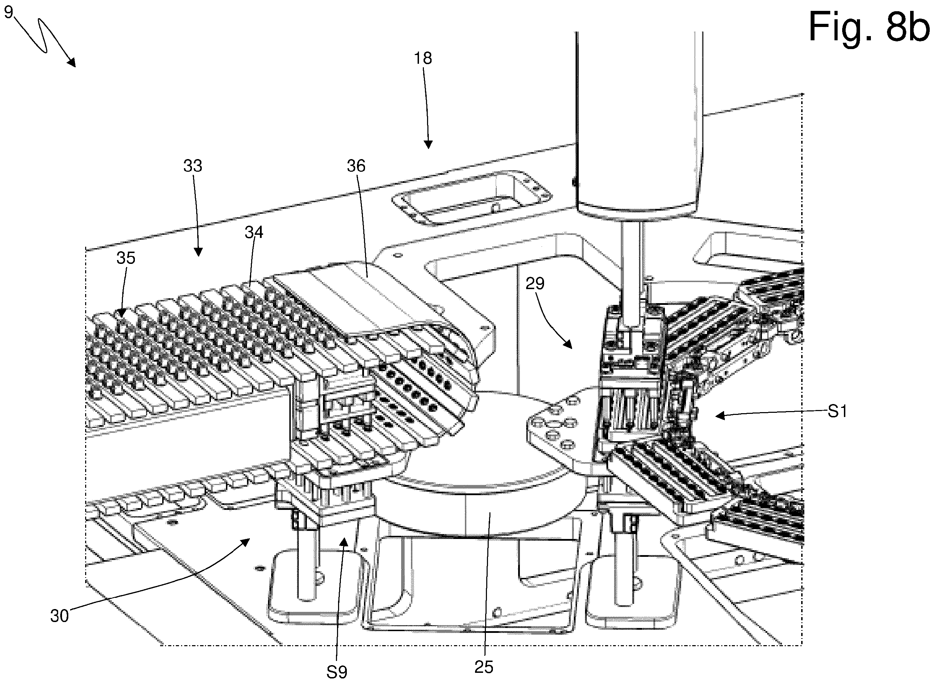

As illustrated in Figures 8a, 8b and 9, the feeding unit 18 comprises a conveyor 33 which receives the tubular casings 2 in a transfer station S10 (illustrated in Figure 8a) and releases the tubular casings 2 to the seats 28 of the feeding drum 25 in the transfer station S9 by moving the tubular casings 2 forward along a straight and horizontal path. As explained in the following, the conveyor 33 causes the tubular casings 2 to make a 180° vertical rotation, i.e., along the conveyor 33 the tubular casings 2 are turned upside down. The conveyor 33 comprises a conveyor belt 34 which is closed in a loop around two end pulleys (not illustrated), and supports a plurality of seats 35 each designed to house a corresponding tubular casing 2. Consequently, the conveyor belt 34 has an upper straight section, a lower straight section and two semi-circular segments which surround the two end pulleys and join the two straight sections to one another. The transfer station S10 is arranged along the upper straight section of the conveyor belt 34 while the transfer station S9 is arranged along the lower straight section of the conveyor belt 34; consequently, in the path from the transfer station S10 to the transfer station S9 the seats 35 containing the tubular casings 2 rotate around an end pulley, being overturned upside down (and consequently overturning the tubular casings 2 contained in the seats 35).

According to a preferred embodiment, the conveyor belt 34 is formed by two side belts arranged parallel to one another at a given distance from one another and from a succession of rigid drawers, each of which is fixed to the two side belts and supports a row of seats 35 arranged perpendicular to a feeding direction of the conveyor 33.

The conveyor 33 comprises a semi-circular side board 36 that is arranged around an end pulley, which is located between the transfer station S10 and the transfer station S9 and externally surrounds the conveyor belt 34 to keep the tubular casings 2 inside the corresponding seats 35.

As better illustrated in Figure 9, in the transfer station S9 the feeding drum 25 is arranged under the conveyor 33, i.e., the conveyor 33 partially overlaps the feeding drum 25 (as well as in the feeding station S1 the feeding drum 25 is arranged under the manufacturing drum 10). In the transfer station S9, the seats 35 of three drawers of the conveyor 33 are vertically aligned with the corresponding seats 28 of a group 27 standing still in the transfer station S9. The transfer device 30 comprises a group of pushing members 37 which are arranged in the transfer station S9 and are vertically movable so as to be inserted into the seats 35 of three drawers of the conveyor 33 and thus push the tubular casings 2 from the seats 35 to the seats 28 of an underlying group 27 standing still in the transfer station S9; moreover, the transfer unit 30 comprises a group of accompanying members 38 which are opposite the pushing members 37 and are vertically movable to accompany the descent of the tubular casings 2 from the seats 35 of three drawers of the conveyor 33 to the seats 27 of the feeding drum 25.

In other words, in the transfer station S9 each tubular casing 2 is transferred from a seat 35 of a drawer of the conveyor 33, standing still in the transfer station S9, to the underlying seat 28 of a group 27 standing still in the transfer station S9, thus completing a vertical downward movement during which the tubular casing 2 is engaged at the bottom by an accompanying member 38 and at the top by a pushing member 37 (i.e. being *"pinched"* between a pushing member 37 arranged above and by an accompanying member 38 arranged under). In said regard it is important to note that accompanying members 38 would not be strictly necessary; however, the presence of the accompanying members 38 allows to impart a controlled movement to the tubular casings 2 which prevents any mispositioning or rebound of the tubular casings 2.

In particular, in the transfer station S9 the pushing members 37 are arranged between the two straight sections of the conveyor belt 34 of the conveyor 33, i.e., they are located "inside" the conveyor belt 34 of the conveyor 33.

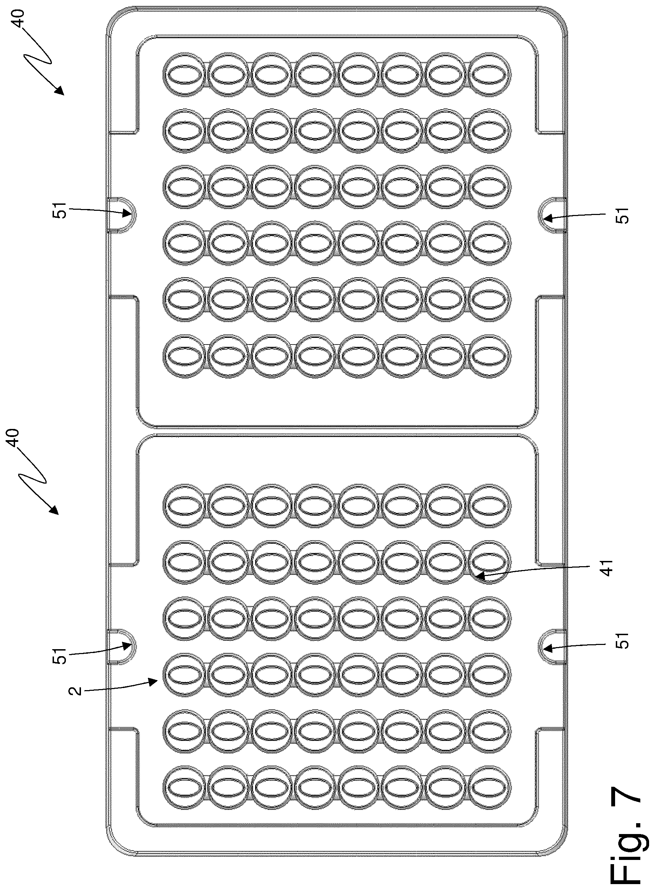

As illustrated in Figure 8a, the feeding unit 18 comprises a conveyor 39 which feeds, through a transfer station S11, a succession of trays 40, each of which is provided with a plurality of seats 41 (better illustrated in Figure 7) each designed to house a corresponding tubular casing 2. Furthermore, the feeding unit 18 comprises a transfer device 42 which picks up a plurality of tubular casings 2 from respective seats 41 of a tray 40 standing still in the transfer station S11 and releases the plurality of tubular casings 2 in respective seats 35 of the conveyor 33.

According to a preferred embodiment, the transfer device 42 comprises two suction and twin gripping heads 43, each of which is designed to hold a plurality of tubular casings 2 by suction; in particular, the two suction gripping heads 43 are mounted at 180° one from the other on a same central rotating support. Furthermore, the transfer device 42 comprises an actuator 44 which cyclically moves (rotates) the two suction gripping heads 43 between the transfer station S10 and the transfer station S11; in particular, when a gripping head 43 is located in the transfer station S10, the other gripping head 43 is located in the transfer station S11 and vice versa. The actuator 44 rotates the two suction gripping heads 43 around a vertical rotation axis 45 to cyclically move the suction gripping heads 43 between the transfer station S10 and the transfer station S11. Furthermore, the actuator 44 is designed to vertically translate the two suction gripping heads 43 to cyclically lower and lift the two suction gripping heads 43: the two suction gripping heads 43 are lowered simultaneously to remove the tubular casings 2 from the seats 41 of a tray 40 and release the tubular casings 2 in the seats 35 of the conveyor 33; moreover, the two suction gripping heads 43 are lifted simultaneously to move them away from the conveyors 33 and 39 and thus allow the two suction gripping heads 43 to rotate by 180°.

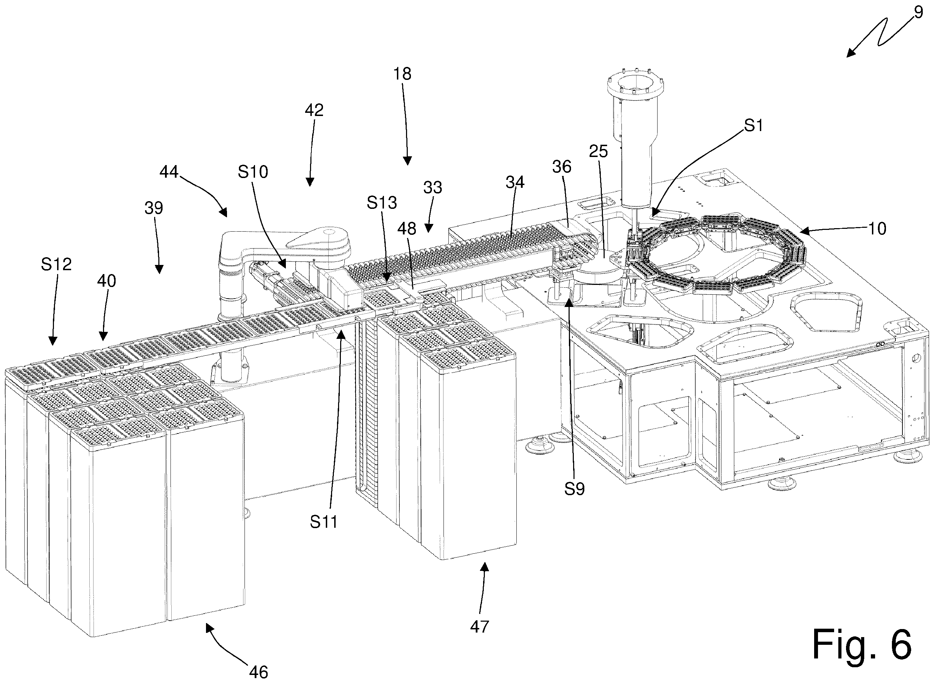

As illustrated in Figure 6, the feeding unit 18 comprises a store 46 which is arranged at the beginning of the conveyor 39, is designed to contain different stacks of full trays 40 (i.e., containing the tubular casings 2) side by side, and is designed to lift and lower each stack of full trays 40 in order to keep the upper full tray 40 always at the same vertical height as the conveyor 39; in this way the conveyor 39 can pick-up the upper full tray 40 from each stack. Furthermore, the feeding unit 18 comprises a store 47 which is arranged at end of the conveyor 39, is designed to contain different stacks of empty trays (i.e., without tubular casings 2) side by side, and is designed to lift and lower each stack of empty trays 40 in order to keep the upper empty tray 40 higher always at the same vertical height as the conveyor 39; in this way the conveyor 39 can release an empty tray 40 to each stack.

According to a preferred embodiment better illustrated in Figure 8a, the feeding unit 18 comprises a clamp 48 which is arranged downstream of the transfer station S11 and are designed to pull an empty tray 40 out of the transfer station S11 so as to arrange the empty tray 40 on top of one of the stacks of the store 47.

According to a preferred embodiment better illustrated in Figure 8a, the conveyor 39 comprises a locking and centring member 49, which is arranged at the transfer station S11 and is provided with opposite pins 50 which are movable so as to be inserted into corresponding recesses 51 (illustrated in Figure 7) provided in each tray 40 standing still in the transfer station S11.

The presence of the feeding drum 25 allows to feed the tubular casings 2 to the seats 13 of the manufacturing drum 10 in an effective and efficient way and above all by respecting all the overall dimension constraints dictated by the presence of the filling units 19 which would not allow the conveyor 33 to arrive directly above the manufacturing drum 10.

The fact that the conveyor 33 rotates the tubular casings 2 by 180° (or rotates the tubular casings 2 upside down) allows the tubular casings 2 to be arranged in the seats 13 of the manufacturing drum 10 with the right orientation in order to proceed with the filling of the tubular casings 2: in fact, in the seats 41 of the trays 40 the tubular casings 2 are arranged with an orientation (opposite to that necessary for filling) which makes the tubular casings 2 more stable inside the seats 41, thus simplifying the movement of the trays 40.

Each filling unit 19 is similar, in its general structure, to the filling unit described and illustrated in the patent applications WO2017051348A1, WO2017051349A1 and WO2017051350A1 to which we refer for a more detailed description of the filling unit 19.

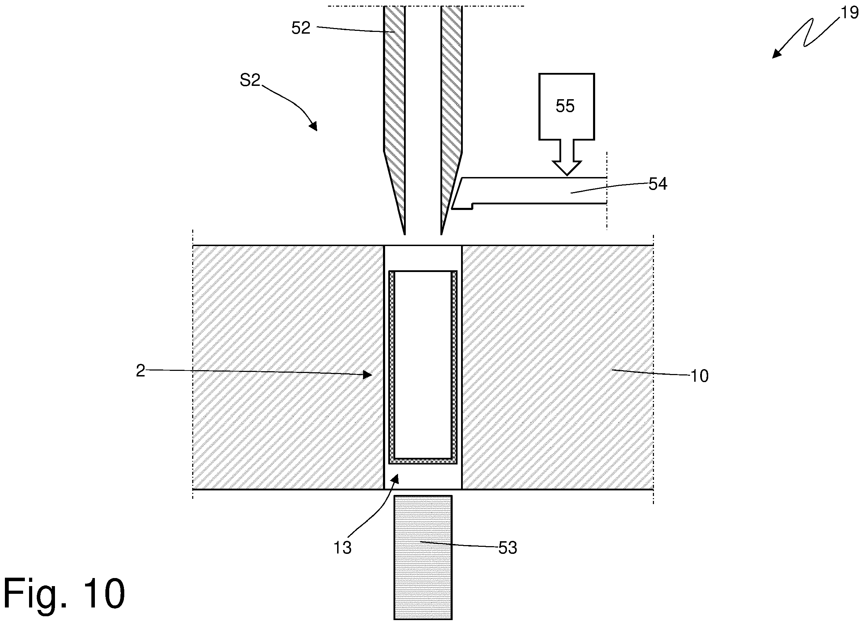

As illustrated in Figures 10, 11 and 12, each filling unit 19 comprises a cylindrical-shaped tank which is arranged horizontally and is mounted so as to rotate, in a stepped manner, around a vertical rotation axis parallel to the rotation axis 11; a feeding duct is coupled to the tank which continuously feeds a flow of tobacco into the tank thus forming a bed. A plurality of dosing ducts 52, having a *"funnel"* (i.e., flared) shaped terminal portion, branch off from a base disk of each tank. In each filling station S2, the tank partially overlaps the manufacturing drum 10, so that, each seat 13 of a group 12, standing still in the filling station S2, is arranged under and vertically aligned with a corresponding dosing duct 52. A plurality of pushing members 53 are provided in each filling station S2, each of which is arranged under the manufacturing drum 10 and vertically aligned with a corresponding seat 13 of a group 12 standing still in the filling station S2. Finally, a plurality of pushing members 54 are arranged in each filling station S2, which are arranged beside the corresponding dosing ducts 52 and are cyclically translated vertically by an actuator 55.

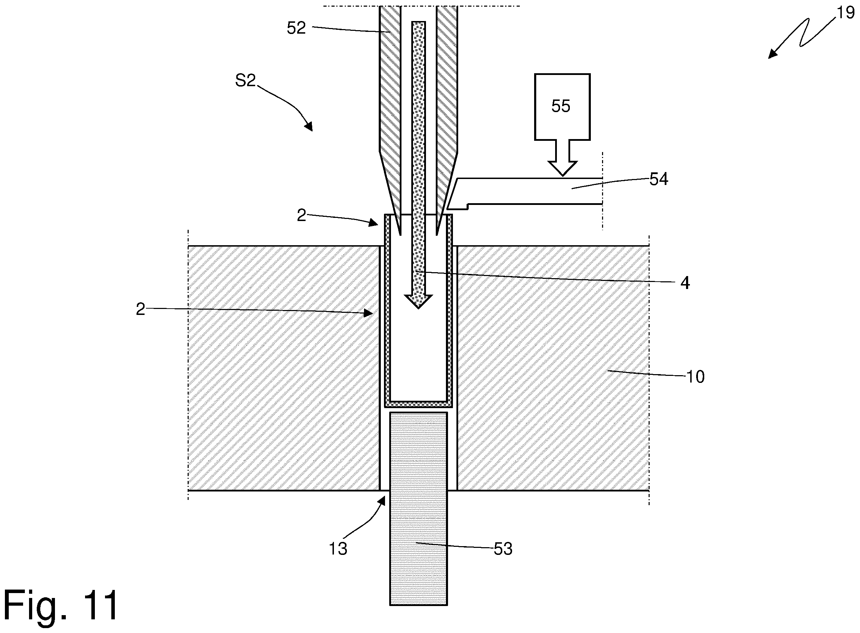

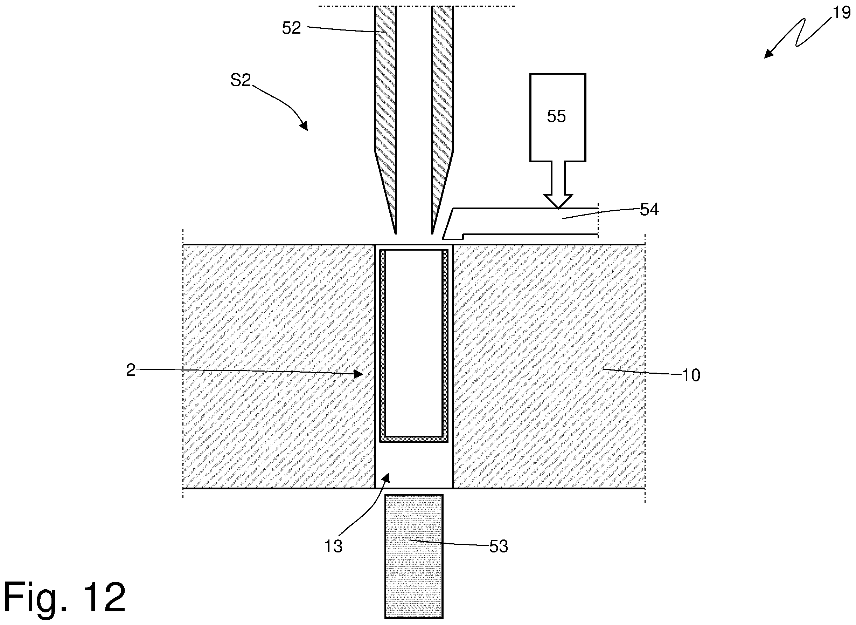

In use and as illustrated in Figure 10, the rotation of the manufacturing drum 10 causes a group 12 of seats 13 to stop at a filling station S2; at this point the pushing members 53 move upwards to extract the tubular casings 2 from their respective seats 14 until the tubular casings 2 fit around the corresponding dosing ducts 52, which are on the opposite side of the pushing members 53 (as illustrated in Figure 11). When the tubular casings 2 are fitted around the corresponding dosing ducts 52, the dosing ducts 52 fed the respective quantities 4 of tobacco into the tubular casings 2. When the dosing ducts 52 have finished feeding the quantities 4 of tobacco, the pushing members 54 perform a downward stroke (as illustrated in Figure 12) to push on the edge of the corresponding tubular casings 2 so as to remove the tubular casings 2 from the corresponding dosing ducts 52 and then re-insert the tubular casings 2 in the corresponding seats 13; obviously in this step the pushing members 53 lower to accompany and not obstruct the descent of the tubular casings 2 which are pushed downwards by the pushing members 54.

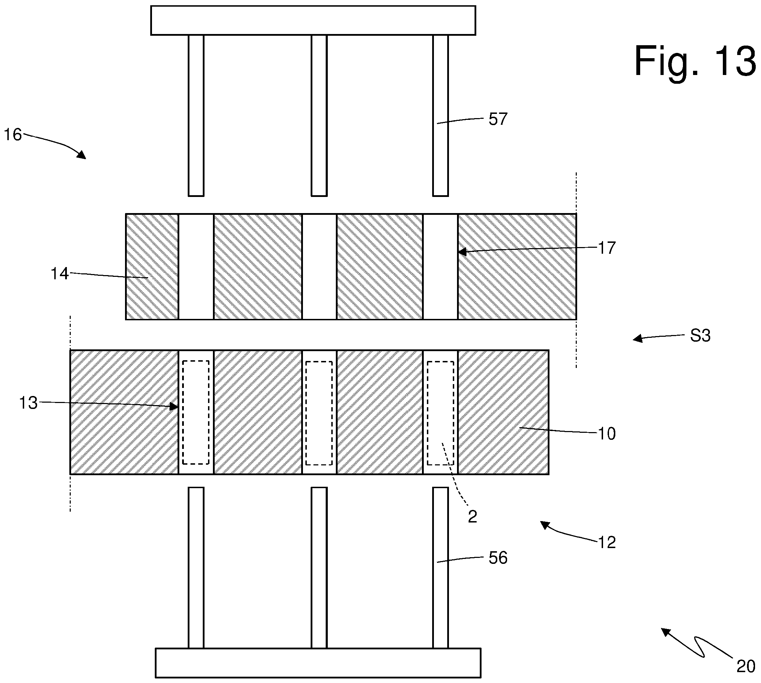

As illustrated in Figure 13, the seats 13 of a group 12, standing still in the transfer station S3, are vertically aligned with the corresponding seats 17 of a group 16 standing still in the transfer station S3. The transfer unit 20 comprises a group of pushing members 56, which are arranged in the transfer station S3, and are vertically movable so as to be inserted into the seats 13 of a group 12 standing still in the transfer station S3 and therefore push the tubular casings 2 from the seats 13 of a group 12, standing still standing still in the transfer station S3, to the seats 17 of a group 16 standing still standing still in the transfer station S3; moreover, the transfer unit 20 comprises a group of accompanying members 57 which are opposite the pushing members 56 and are vertically movable to accompany the ascent of the tubular casings 2 from the seats 12 of the manufacturing drum 10 to the seats 16 of the manufacturing drum 14.

In other words, in the transfer station S3 each tubular casing 2 is transferred from a seat 13 of a group 12, standing still in the transfer station S3, to the overlying seat 17 of a group 16 standing still in the transfer station S3 by making a vertical upward movement during which the tubular casing 2 is engaged at the bottom by a pushing member 56 and at the top by an accompanying member 57 (i.e., it is "pinched" between a pushing member 56 arranged under and by an accompanying member 57 arranged above) . In this regard, it is important to note that accompanying members 57 would not be strictly necessary; however, the presence of the accompanying members 57 allows to impart a controlled movement to the tubular casings 2 which prevents any mispositioning or rebound of the tubular casings 2.

As previously said, the feeding unit 21 is designed to couple a plurality of upper walls 6 to respective tubular casings 2 housed in a group 12 of seats 13 standing still in the feeding station S4.

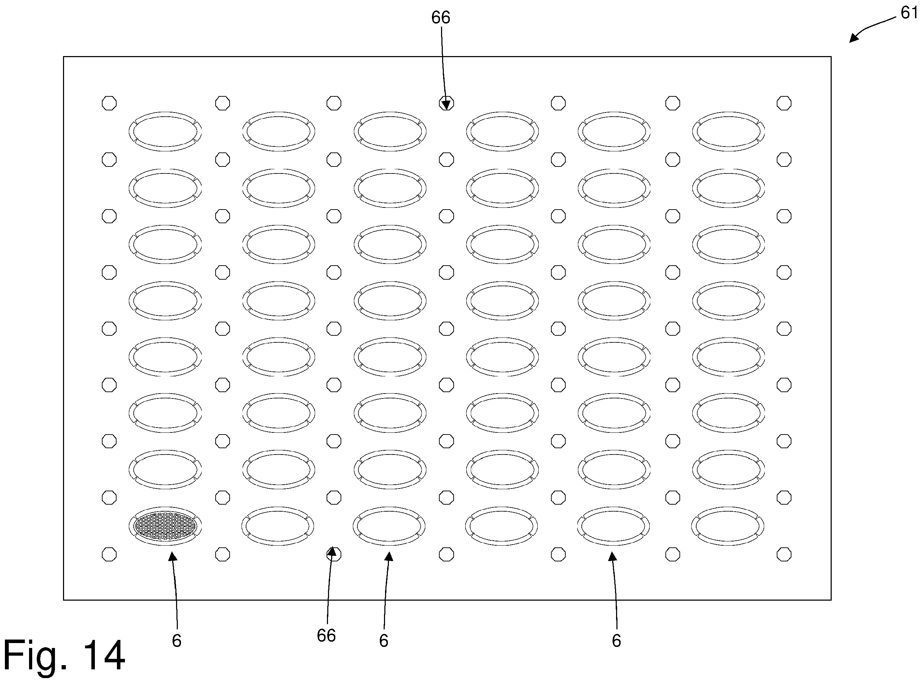

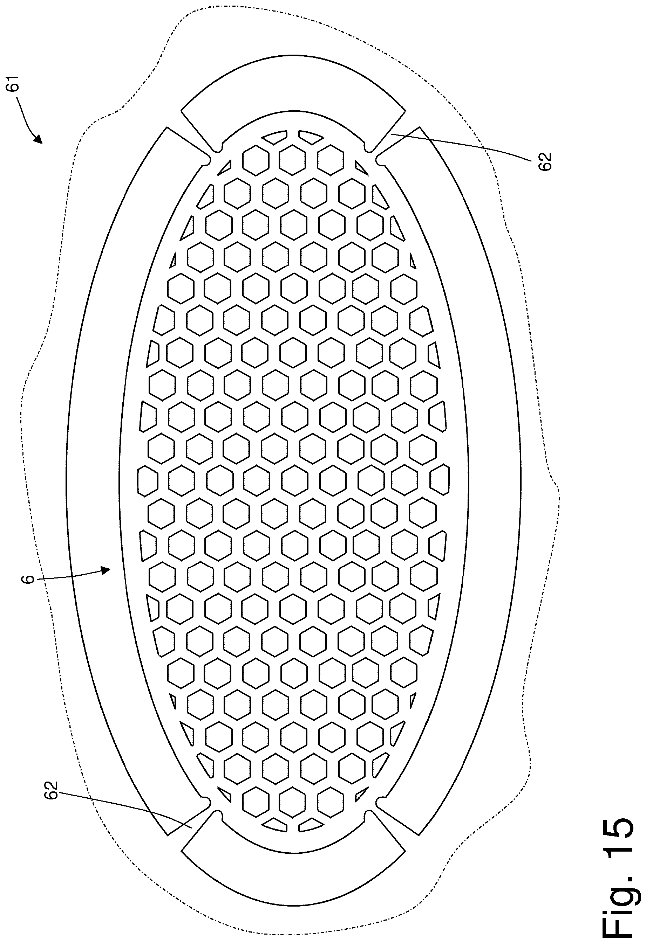

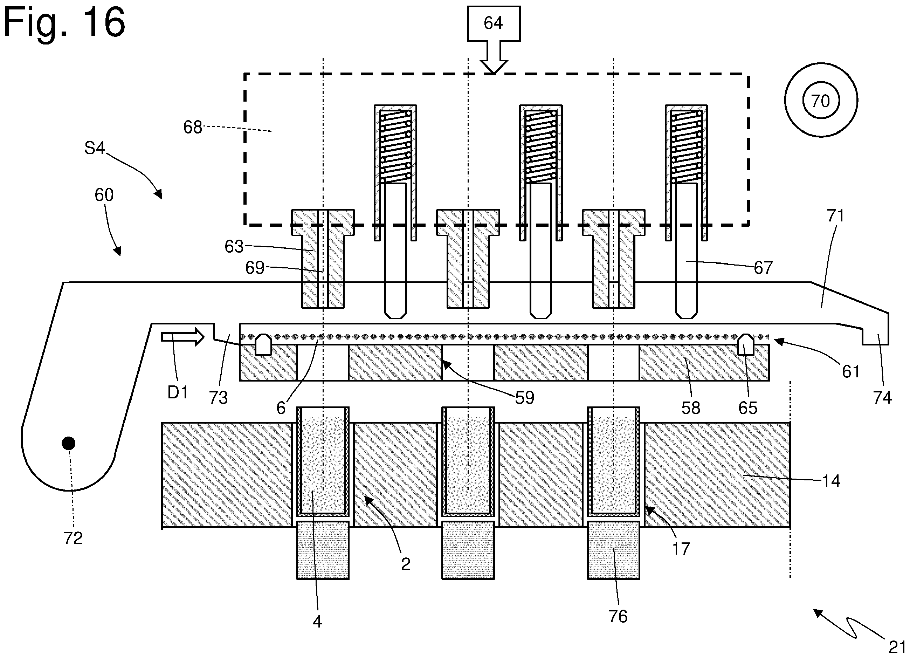

As illustrated in Figure 16, the feeding unit 21 comprises a die 58 which is arranged in the feeding station S4 above the manufacturing drum 14 (i.e., above the group 16 of seats 17 standing still in the feeding station S4) and has a plurality of through openings 59, each of which is shaped like an upper wall 6 (i.e., it has the same shape and substantially the same dimensions as an upper wall 6) and is vertically aligned to an underlying seat 17. The feeding unit 21 comprises a conveyor 60 which is designed to place a plate 61 in contact with the die 58 (i.e., above the die 58) in which a plurality of upper walls 6 are engraved. The plate 61 is better illustrated in Figure 14 (in which the whole plate 61 is illustrated with all the upper walls 6 highlighted) and in Figure 15 (in which a portion of the plate 61 containing one single upper wall 6 is illustrated); as illustrated in Figure 15, each upper wall 6 is connected to the rest of the plate 61 by means of a plurality of (in particular four) connection strips 62 which have a reduced size and therefore are relatively easy to break (shear).

As illustrated in Figure 16, the feeding unit 21 comprises a plurality of cutting punches 63 which are arranged in the feeding station S4 above the die 58 in alignment with the through openings 59 of the die 58; each cutting punch 63 has the same conformation of the upper walls 6 and therefore of the through openings 59 of the die 58 and consequently each cutting punch 63 is designed to be inserted (with minimal clearance) into a corresponding through opening 59 of the die 58 The conveyor 60 is designed to rest the plate 61 over the die 58 and therefore the plate 61 is (initially) between the die 58 (under) and the cutting punches 63 (above).

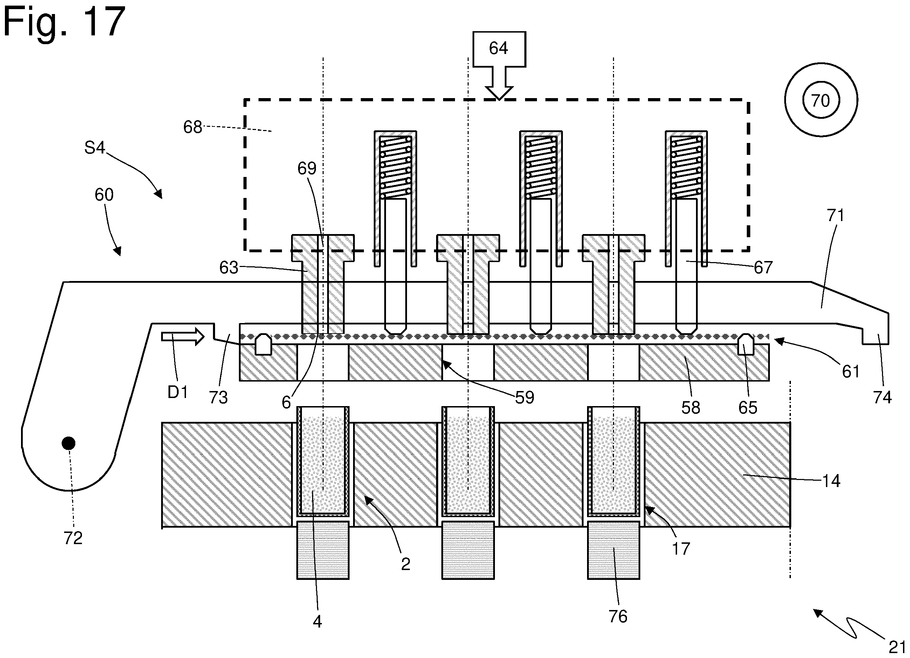

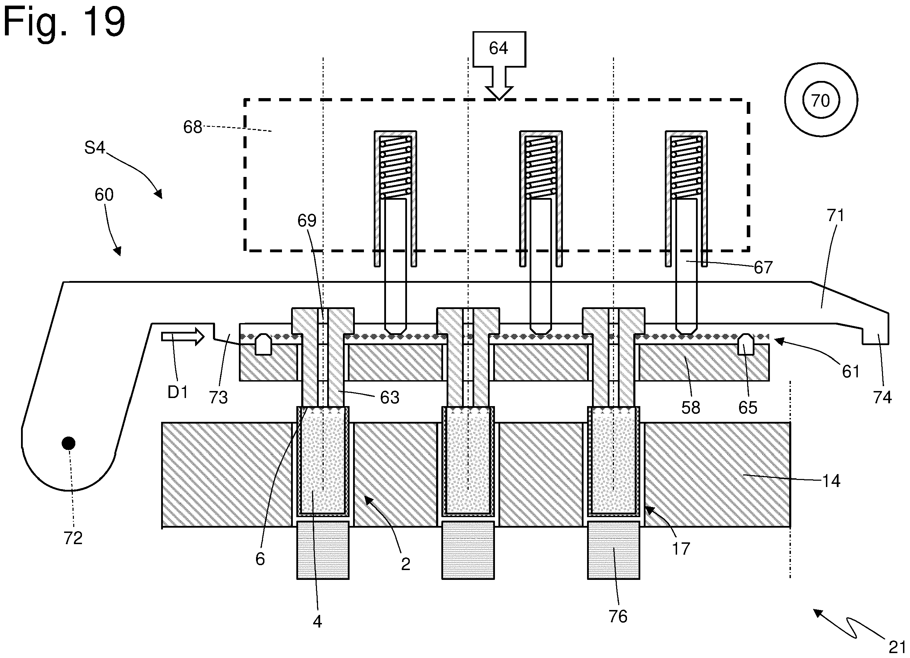

The feeding unit 21 comprises an actuator 64 designed to move the cutting punches 63 between a rest position (illustrated in Figure 16), in which the cutting punches 63 are separate from the die 58, and an application position (illustrated in Figure 19), in which the cutting punches 63 are arranged through the respective through openings 59, in contact with the underlying respective tubular casings 2 housed in the group 16 of seats 17 standing still in the feeding station S4 to rest the upper walls 6 on the tubular casings 2. In particular, in the application position, the ends of the punches 63 which carry the upper walls 6 are arranged inside the corresponding tubular casings 2. Passing from the rest position (illustrated in Figure 16) to the application position (illustrated in Figure 19), each punch 63 comes into contact (as illustrated in Figure 17) with a corresponding upper wall 6 contained in the plate 61, thus performing the cutting of the upper wall 6 (i.e., the breakage of the connection strips 62) which separates the upper wall 6 from the remaining part of the plate 61.

According to a preferred embodiment, the die 58 has a group of reference pins 65 which rise upwards from the die 58 and are designed to engage corresponding centring holes 66 (illustrated in Figure 14) made through the plate 61. Each reference pin 65 has a flared shape (conical or frusto-conical) at the top, so as to ease the insertion of the reference pin 65 in a corresponding centring hole 66. Each reference pin 65 could be spring-loaded in order to be pushed (by compressing a corresponding elastic element) inside the die 58 when the plate 61 has to be moved, or each reference pin 65 could be motorized to be lifted out of the die 58 when it has to be blocked in a desired position the plate 61 and to be lowered into/inside the die 58 when the plate 61 is to be moved.

According to a preferred embodiment, the feeding unit 21 comprises spring-loaded pressing elements 67 which are arranged beside the cutting punches 63 and are moved by the actuator 64 towards the die 58 in order to press the plate 61 against the die 58; in other words, when the cutting punches 63 move towards the plate 61 before the cutting punches 63 come into contact with the plate 61, the plate 61 is engaged by the spring-loaded pressing elements 67 which vertically press the plate 61 against the die 58 so as to ensure that the plate 61 is perfectly flat and cannot perform any undesired movement with respect to the die 58. Generally, each spring-loaded pressing element 67 comprises a pressure element which is mounted vertically slidable inside a base element with the interposition of a spring which tends to push the pressing element 67 out of the base element; there are obviously stroke end stops to prevent the spring from pushing the pressure element 67 outside the base element.

According to a possible embodiment, the actuator 64 comprises a support plate 68 which is mounted vertically movable above the die 58 and supports the cutting punches 63 and the pressing elements 67; the plate 68 could be formed by one single piece which supports the cutting punches 63 and the pressing elements 67, so that, the cutting punches 63 and the pressing elements 67 perform exactly the same stroke, or the plate 68 could be formed by two pieces, one supporting the cutting punches 63, the other supporting the pressing elements 67, so that, the cutting punches 63 have a longer stroke than the pressing elements 67.

According to a preferred embodiment, each cutting punch 63 has at least one hole 69 which opens into a lower surface and is connectable to a pneumatic source 70 to hold the corresponding upper wall 6 by suction (when the pneumatic source 70 generates a depression which draws air into the hole 69) or to move a corresponding upper wall 6 away from the cutting punch 63 (when the pneumatic source 70 generates compressed air which produces a compressed air blow that comes out of the hole 69). In other words, as soon as a cutting punch 63 has separated a corresponding upper wall 6 from the plate 61, the upper wall 6 could fall uncontrolled by gravity; for this reason, in this step, the pneumatic source 70 generates a depression which allows the upper wall 6 to be held by suction in contact with the lower surface of the cutting punch 63. Instead, as soon as a cutting punch 63 has reached an underlying tubular casing 2 at the end of its downward stroke, the cutting punch 63 should release a corresponding upper wall 6 on the tubular casing 2, but the upper wall 6 could somehow remain in contact with the cutting punch 63; to ensure that the upper wall 6 separates from the cutting punch 63 at the end of its downward stroke, the pneumatic source 70 generates compressed air which, exiting the hole 69, pushes the upper wall 6 away from the cutting punch 63.

The conveyor 60 is designed to translate the plate 61 along a horizontal conveying direction D1 in order to arrange the plate 61 above the die 58 before feeding the upper walls 6 to the tubular casings 2 and to move the plate 61 away from the die 58 after feeding the upper walls 6 to the tubular casings 2 (the *"exhausted"* plate 61 i.e., completely devoid of the upper walls 6, is pushed towards a collection area for processing waste). According to a possible embodiment, each plate 61 has a multiple (double, triple, quadruple ...) of the number of upper walls 6 fed at each cycle to a group 16 of seats 17 standing still in the feeding station S4 (i.e. the plate 61 can be used for different successive feeding cycles); in this case, the conveyor 60 is designed to arrange the plate 61 on the die 58 in a first feeding position in which a first feeding of the upper walls 6 to the tubular casings 2 is carried out and therefore it is designed to place the plate 61 on the die 58 in a second (third, fourth ...) feeding position in which a second (third, fourth ...) feeding of the upper walls 6 to the tubular casings 2 is carried out. Only when the plate 61 is *"exhausted"* (i.e., it is completely devoid of the upper walls 6), the conveyor 60 moves the plate 61 away from the die 58 by pushing the *"exhausted"* plate 61 towards a collection area for processing waste. According to a different embodiment, each plate 61 has exactly the number of upper walls 6 fed at each cycle to a group 16 of seats 17 standing still in the feeding station S4 (i.e. the plate 61 can only be used for one single feeding cycle); in this case, the conveyor 60 is designed to place the plate 61 on the die 58 in one single feeding position in which the only feeding of the upper walls 6 to the tubular casings 2 is carried out and therefore is designed to move the plate 61 away from the die 58 by pushing the *"exhausted"* plate 61 towards a collection area for processing waste.

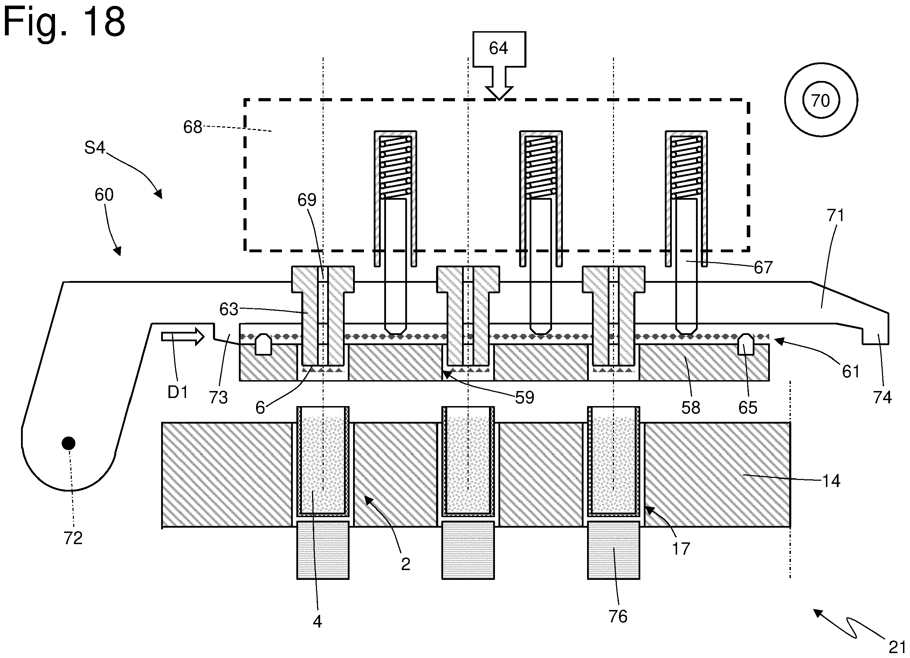

In use, the conveyor 60 has a plate 61 in which a plurality of upper walls 6 in contact with a die 58 are engraved, which is located in the feeding station S4 and has a plurality of through openings 59 each shaped like an upper wall 6 (as illustrated in Figure 16); once the plate 61 has been secured in the desired position by the insertion of the reference pins 65 in the centring holes 66, the actuator 64 moves the cutting punches 63 and the pressing elements 67 downwards: initially only the pressing elements 67 come into contact with the plate 61 to elastically press the plate 61 against the die 58 (as illustrated in Figure 17) and subsequently the cutting punches 63 come into contact with the plate 61 causing the separation of the upper walls 6 from the plate 61 which, pushed by the cutting punches 63, drop along the through openings 59 of the die 58 (as illustrated in Figure 18). At the end of the downward stroke, the cutting punches 63 are in the application position and rest the upper walls 6 on the underlying tubular casings 2 housed in the group 16 of seats 17 standing still in the feeding station S4 (as illustrated in Figure 19); at this point the feeding of the upper walls 6 is finished and the cutting punches 63 can return to the initial rest position (illustrated in Figure 16).

According to a preferred embodiment, the conveyor 60 comprises a pushing member 71 which is movably mounted so as to translate along the horizontal conveying direction D1 and is mounted so as to rotate so as to rotate around a horizontal rotation axis 72 perpendicular to the conveying direction D1 between a pushing position (illustrated in the attached figures) in which the pushing member 71 is lowered and engages the plate 61, and a return position (not illustrated) in which the pushing member 71 is lifted and does not engage the plate 61. In particular, the pushing member 71 is arranged above the die 58 and has a pushing element 73 which projects in a cantilever manner downwards and is designed to push the plate 61 above the die 58 and a pushing element 74 which projects in a cantilever manner downwards and is designed to push the plate 61 outside the die 58 (i.e., the pushing element 74 is arranged downstream of the pushing element 73 along the conveying direction D1).

In use, the pushing member 71 is in the pushing position (illustrated in the attached figures) and moves forward along the conveying direction D1 pushes (by means of the pushing element 73) the plate 61 above the die 58; subsequently, the pushing member 71 rotates around the rotation axis 72 to rise towards the return position (not illustrated), moves backwards, rotates again around the rotation axis 72 to lower towards the pushing position (illustrated in attached figures) and then pushes (by means of the pushing element 74) the plate 61 beyond the die 58 (outside the die 58) by moving forward along the conveying direction D1. At this point, the pushing member 71 rotates around the rotation axis 72 to rise towards the return position (not illustrated), moves backwards, rotates again around the rotation axis 72 to lower towards the pushing position (illustrated in the attached figures) and then pushes (by means of the pushing element 73) a new plate 61 above the die 58.

According to an alternative embodiment, in use the pushing member 71 is in the pushing position (illustrated in the attached figures) and by moving forward along the conveying direction D1 it pushes (by means of the pushing element 73) the plate 61 above the die 58; subsequently, the pushing member 71 rotates around the rotation axis 72 to rise towards the return position (not illustrated), moves backwards, rotates again around the rotation axis 72 to lower towards the pushing position (illustrated in the attached figures) and then pushes (by means of the pushing element 74) the plate 61 on the die 58 and pushes (by means of the pushing element 73) a new plate 61 towards the die 58 by moving along the conveying direction D1.

Obviously, if the pushing member 71 only has to slightly translate the plate 61 on the die 58, it is sufficient to feed the pushing member 71 along the conveying direction D1, by pushing the plate 61 by means of the pushing element 73 (therefore without any rotation of the pushing member 71 around the rotation axis 72).

Obviously, the pushing member 71 has through windows in which the cutting punches 63 and the pressing elements 67 are arranged.

According to a possible embodiment, pushing members 76 are provided in the feeding station S4, which are arranged under the manufacturing drum 14 in vertical alignment with the seats 17 of a group 16 of seats 17 standing still in the feeding station S4 and have the function of lifting the tubular casings 2 upwards towards the overlying die 58 so as to bring the tubular casings 2 closer to the die 58 and to provide the tubular casings 2 with a stable contrast to the cutting punches 63 when the cutting punches 63 come into contact with tubular casings 2.

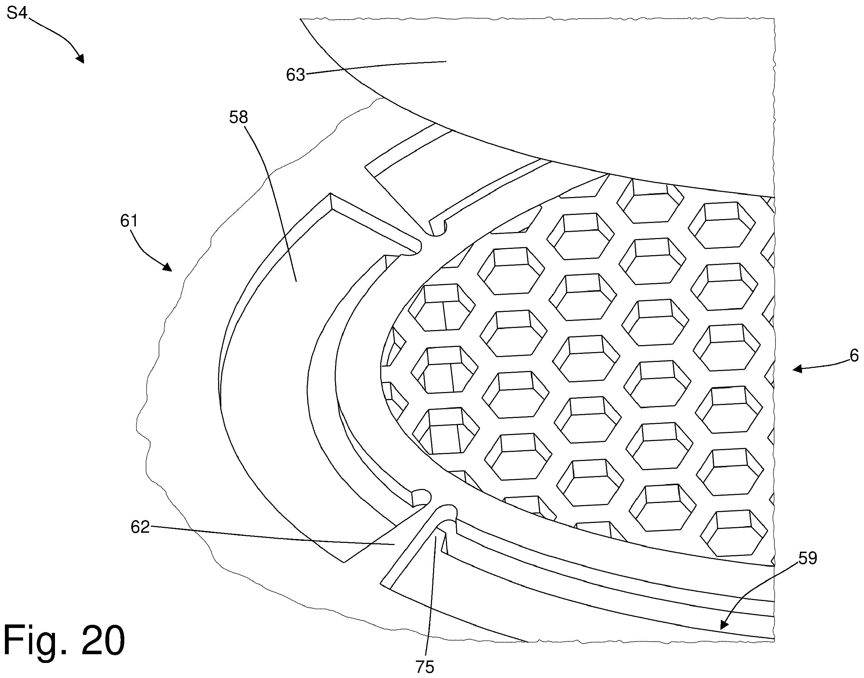

According to a preferred embodiment illustrated in Figure 20, each through opening 59 of the die 58 has axial ribs 75 which are arranged at connection strips 62 which connect the corresponding upper wall 6 to the plate 61 and ease the breaking of the connection strips 62 during the downward movement of the corresponding cutting punch 63.

The feeding unit 21 allows to feed the upper walls 6 to the tubular casings 2 with a high operating speed while treating the upper walls 6 in a particularly *"gentle"* way (i.e., without subjecting the upper walls 6 to excessive mechanical stress which could damage the same). In particular, thanks to the fact that initially the upper walls 6 are integrated in the plates 61, the upper walls 6 are particularly protected (and therefore not damaged) during the transport of the upper walls 6 towards the feeding unit 21.

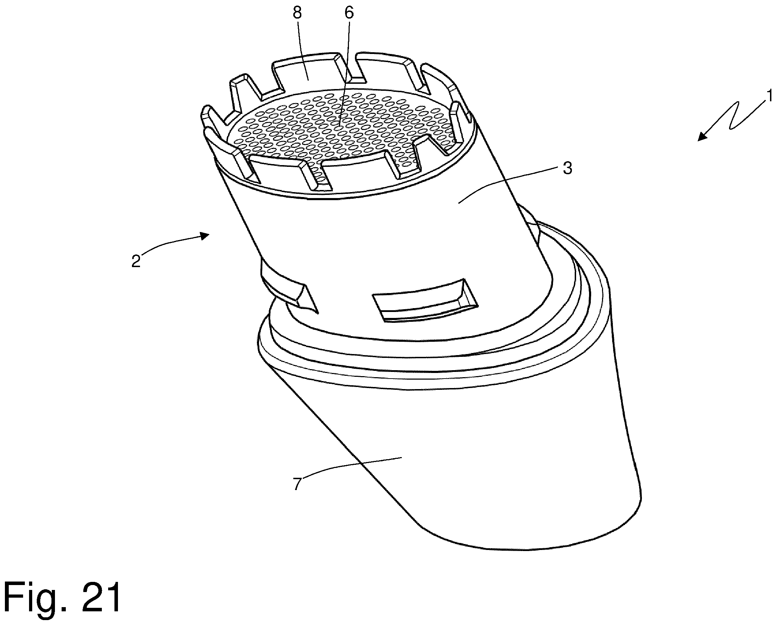

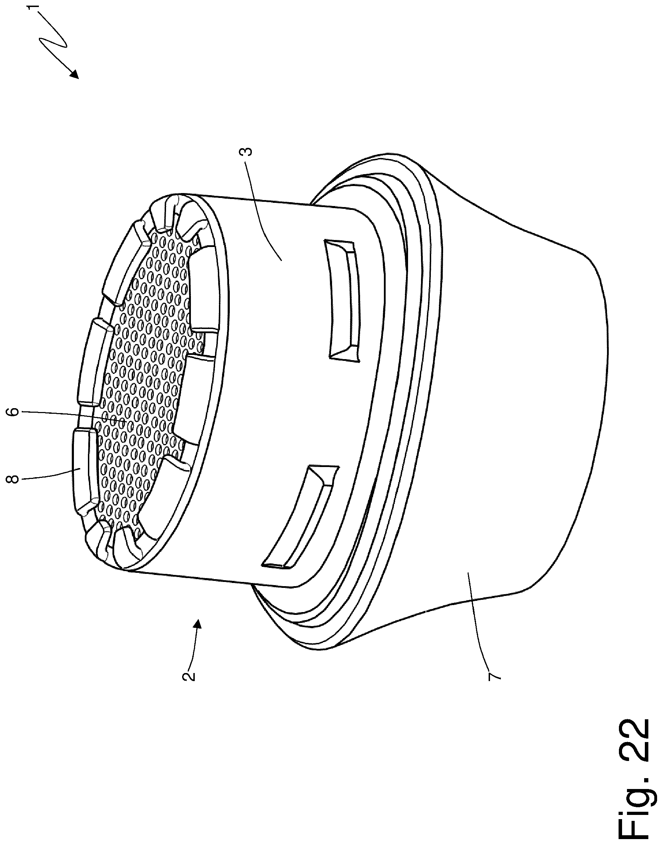

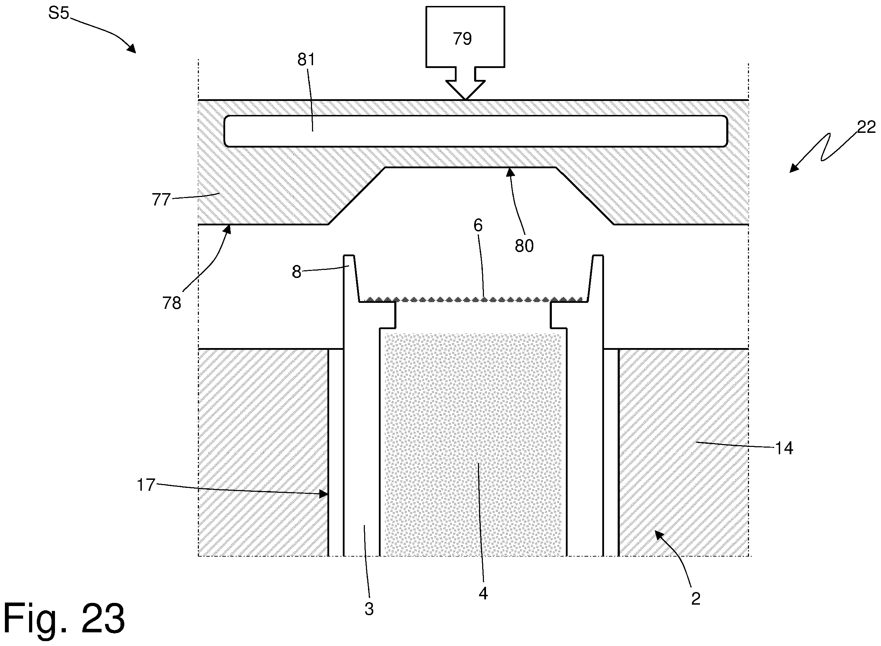

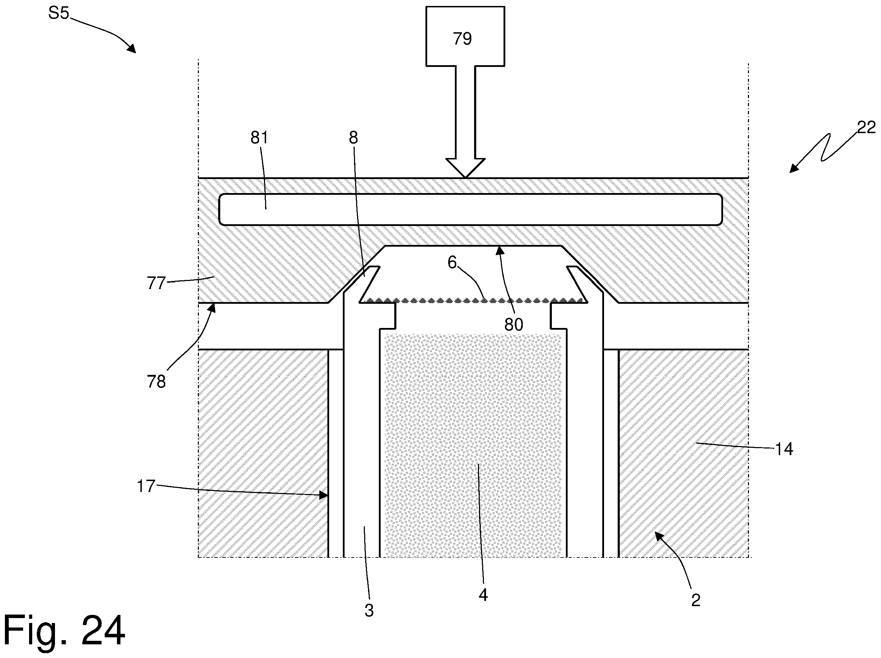

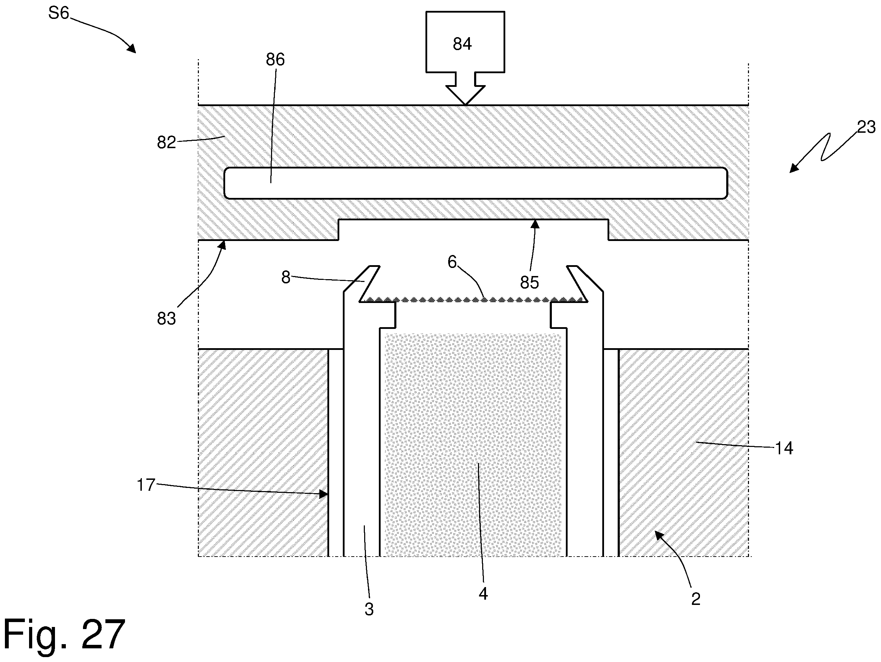

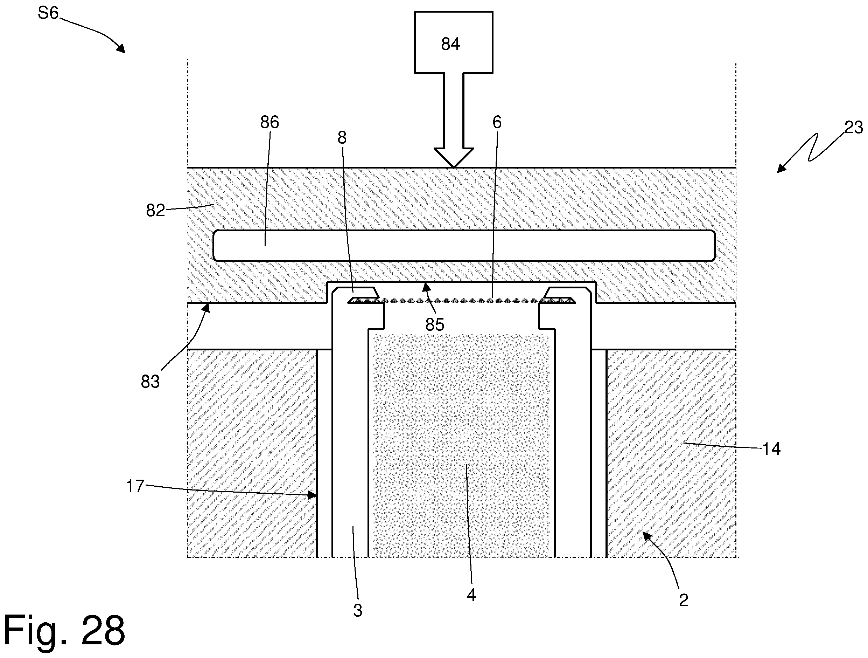

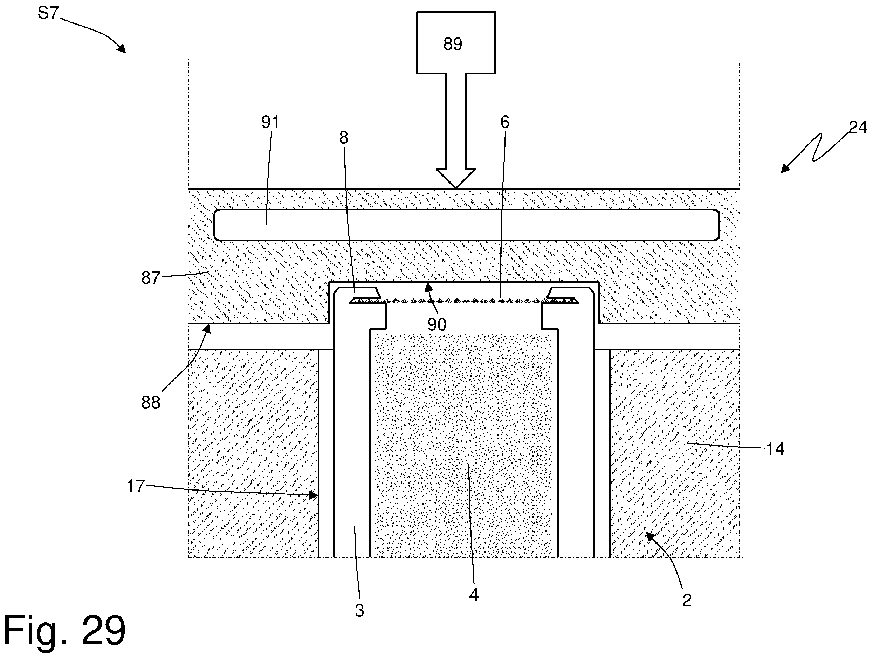

As previously said and as is well illustrated in Figures 21 and 22, the upper edge of a tubular casing 2 has a plurality of locking teeth 8 which are deformed to lock the upper wall 6. In the initial bending station S5, the bending unit 22 bends the locking teeth 8 of the tubular casings 2 carried by the seats 17 of a group 16 standing still in the initial bending station S5 by approximately 45° (as illustrated in Figures 23 and 24), in the final bending station S6 the bending unit 23 bends the locking teeth 8 of the tubular casings 2 carried by the seats 17 of a group 16 standing still in the final bending station S6 by 90° (as illustrated in Figures 27 and 28), and in the cooling station S7 the cooling unit 24 cools the locking teeth 8 of the tubular casings 2 carried by the seats 17 of a group 16 standing still in the cooling station S7 (as illustrated in Figure 29). In other words, the bending unit 22, for each tubular casing 2, partially bends the locking teeth 8 towards the upper wall 6 keeping the locking teeth 8 separate from the upper wall 6; subsequently the bending unit 23 (which is separate from and independent of the bending unit 22 and is arranged downstream of the bending unit 22 relative to the feeding direction of the manufacturing drum 14), for each tubular casing 2, completely bends the locking teeth 8 against the upper wall 6 by resting the locking teeth 8 against the upper wall 6 . Overall, the units 22, 23 and 24 form a closing system which is designed to bend the locking teeth 8 against the corresponding upper walls 6 in the tubular casings 2 housed in a group 16 of seats 17 which moves in a stepped manner through the stations S5, S6 and S7.

In the embodiment illustrated in the attached figures, the bending unit 22, for each tubular casing 2, bends the locking teeth 8 by an angle of approximately 45°; more generally, the bending unit 22, for each tubular casing 2, bends the locking teeth 8 by an angle ranging from 25° and 45° (in some situations even ranging from 25° and 60°).

As illustrated in Figures 23 and 24, the bending unit 22 comprises a bending plate 77 that has a lower wall 78, which is brought into contact with the locking teeth 8, and an actuator 79 (typically an electric motor) which translates the bending plate 77 vertically between a rest position (illustrated in Figure 23), in which the bending plate 77 is separate from the locking teeth 8 and an operating position (illustrated in Figure 24), in which the bending plate 77 is in contact with the locking teeth 8 to push and therefore bend the locking teeth 8.

According to a preferred embodiment illustrated in Figures 23 and 24, the bending plate 77 has, for each tubular casing 2 that is standing still in the bending station S5, a frusto-conical shaped cavity 80 (i.e. a blind hole) where the inclined inner wall is, in the operating position (illustrated in Figure 24), brought into contact with the locking teeth 8 to progressively push and therefore progressively bend the locking teeth 8; in other words, through the lower wall 78 of the bending plate 77 a plurality of cavities 80 are provided, each of which having a frusto-conical shaped inner wall which, in the operating position (illustrated in Figure 24), comes into contact with the locking teeth 8 by progressively pushing downwards (thus bending) the locking teeth 8 .

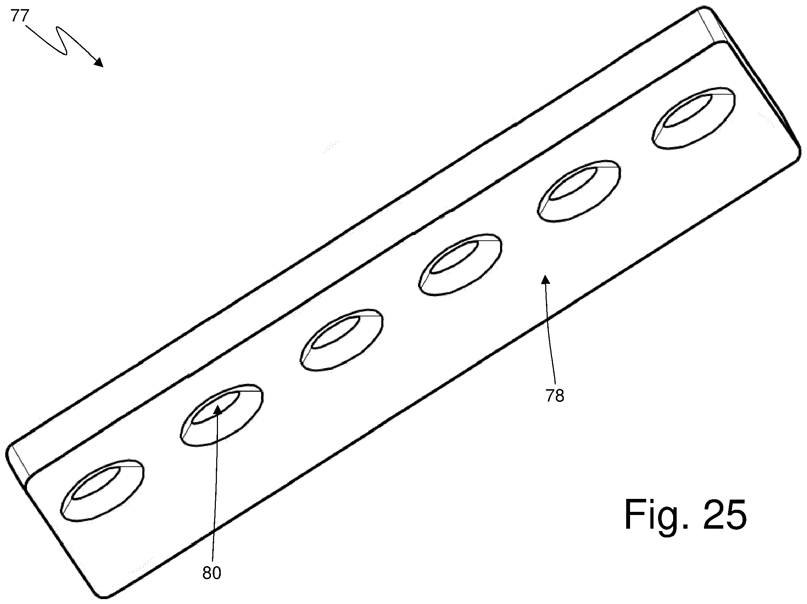

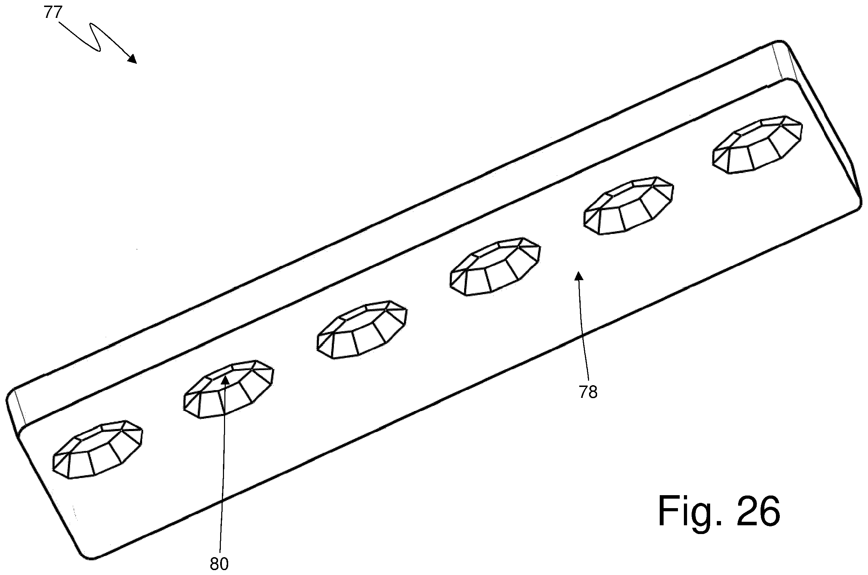

In the embodiment illustrated in Figure 25, the inner wall of each cavity 80 is a curved surface devoid of sharp corners; in the alternative embodiment illustrated in Figure 26, the inner wall of each cavity 80 is composed of different flat portions which are next to one another, form sharp corners one with the other, and are each associated with one single corresponding locking tooth 8.

According to a preferred embodiment illustrated in Figures 23 and 24, the bending unit 22 comprises a heating device 81 (for example an electric resistor) designed for heating the bending plate 77; in this way, when the bending plate 77 rests upon the locking teeth 8, it heats the locking teeth 8 thus softening them (the tubular casings 2 are preferably made of thermoplastic plastic material) and therefore making the bending thereof easier (also reducing the risk of breaking the locking teeth 8). When the bending plate 77 is heated by the heating device 81, each cavity 80 is sized taking into account the thermal expansion of the tubular casings 2 following the heating caused by the heating device 81.

As illustrated in Figures 27 and 28, the bending unit 23 comprises a bending plate 82 which has a lower wall 83 that is brought into contact with the locking teeth 8, and an actuator 84 (typically an electric motor) which translates the bending plate 82 vertically between a rest position (illustrated in Figure 27), in which the bending plate 82 is separate from the locking teeth 8, and an operating position (illustrated in Figure 28), in which the bending plate 82 is in contact with the locking teeth 8 to push and therefore bend the locking teeth 8.

According to a preferred embodiment illustrated in Figures 27 and 28, the bending plate 82 has, for each tubular casing 2 that is standing still in the bending station S5, a cylindrical-shaped cavity 85 (i.e. a blind hole) the base wall of which is, in the operating position (illustrated in Figure 28), brought into contact with the locking teeth 8 so as to push and, hence, bend the locking teeth 8; in other words, through the lower wall 78 of the bending plate 82 a plurality of cavities 85 are provided, each of which having a cylindrical-shaped inner wall which, in the operating position (illustrated in Figure 28), comes into contact with the locking teeth 8 by pushing progressively downwards (thus bending) the locking teeth 8. According to a different embodiment not illustrated, the lower wall 83 of the bending plate 82 is completely flat and devoid of recesses or projections and is, in the operating position, brought into contact with the locking teeth 8 so as to push and therefore bend the locking teeth 8.

According to a preferred embodiment illustrated in Figures 27 and 28, the bending unit 23 comprises a heating device 86 (for example an electric resistance) designed for heating the bending plate 82; in this way, when the bending plate 82 rests on the locking teeth 8, it heats the locking teeth 8 thus softening them (the tubular casings 2 are preferably made of thermoplastic plastic material) and therefore making the bending thereof easier (also reducing the risk of breaking the locking teeth 8). When the bending plate 82 is heated by the heating device 86, each cavity 85 is sized taking into account the thermal expansion of the tubular casings 2 following the heating caused by the heating device 86.

As illustrated in Figure 29, the cooling unit 24 comprises a cooling plate 87 which has a lower wall 88 that is brought into contact with the locking teeth 8, and an actuator 89 (typically an electric motor) which translates the cooling plate 87 vertically between a rest position (not illustrated), in which the cooling plate 87 is separate from the locking teeth 8, and an operating position (illustrated in Figure 29) in which the cooling plate 87 is in contact with the teeth 8 to cool the locking teeth 8 .

According to a preferred embodiment illustrated in Figure 29, the cooling plate 87 has, for each tubular casing 2 that is standing still in the bending station S5, a cylindrical-shaped cavity 90 (i.e. a blind hole) the base wall of which is, in the operating position (illustrated in Figure 28), brought into contact with the locking teeth 8 to cool the locking teeth 8; in other words, through the lower wall 78 of the cooling plate 87 a plurality of cavities 90 are provided, each of which having a cylindrical-shaped inner wall which, in the operating position (illustrated in Figure 29), comes into contact with the locking teeth 8 by cooling the locking teeth 8. According to a different embodiment not illustrated, the lower wall 88 of the cooling plate 87 is completely flat and devoid of recesses or projections and is, in the operating position, brought into contact with the locking teeth 8 to cool the locking teeth 8.

The cooling unit 24 comprises a cooling device 91 (for example a hydraulic circuit in which a refrigerant fluid flows, which is cooled by means of a refrigeration cycle) designed to cool the cooling plate 87; in this way when the cooling plate 87 rests on the locking teeth 8 it cools the locking teeth 8, thus stiffening them (the tubular casings 2 are preferably made of thermoplastic plastic material) and therefore making the bending thereof stable and permanent. Obviously, each cavity 90 is sized taking into account the thermal expansion of the tubular casings 2 following the heating caused by the heating device 86 of the previous bending unit 23.

In the embodiment illustrated in the attached figures, two successive bending units 22 and 23 are provided which bend the locking teeth 8 in two distinct steps (i.e. the bending unit 22 bends the locking teeth 8 approximately by 45° and subsequently the bending unit 22 completes the bending by 90° of the locking teeth 8); according to a different embodiment not illustrated, three (or more) successive bending units are provided which progressively increase the degree of bending of the locking teeth 8 until reaching the final bend of 90°.

According to a different embodiment not illustrated, the cooling unit 24 is not provided; this embodiment is obviously chosen when the bending plates 77 and 82 are not heated, i.e., are devoid of the heating devices 81 and 86, and is optional when the bending plates 77 and 82 are heated.

The closing system formed by the units 22, 23 and 24 allows the locking teeth 8 to be bent at a high operating speed and thus ensuring optimal (stable) locking of the upper walls 6, without however running the risk of damaging (breaking) the locking teeth 8.

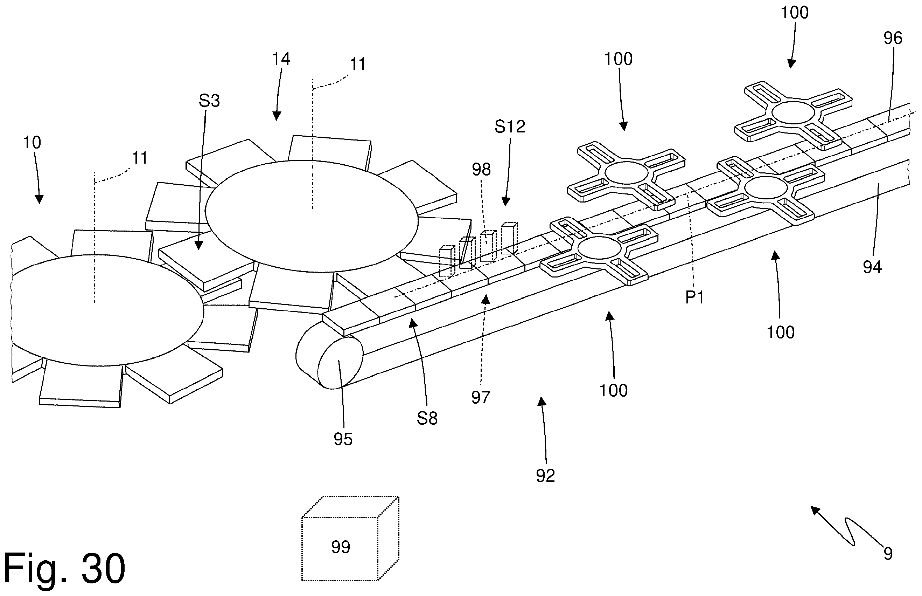

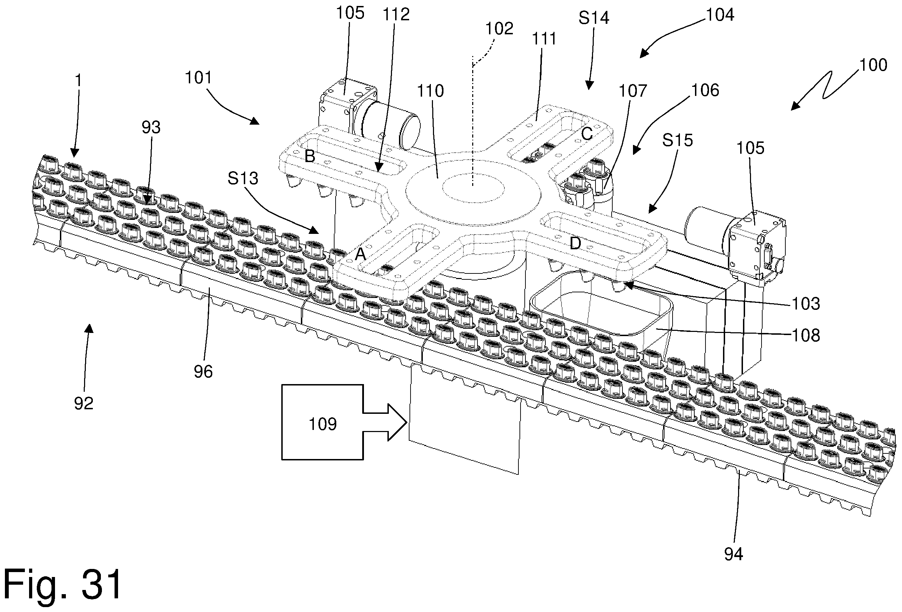

As illustrated in Figure 30, the manufacturing machine 9 comprises a moving conveyor 92 which originates from the transfer station S8 and feeds, along a horizontal and straight moving path P1, a plurality of seats 93 (illustrated in Figures 31-37) each designed to house a corresponding cartridge 1. As illustrated in Figures 31-37, the seats 93 form a succession of rows, each of which is formed by three seats 93 and extends perpendicular to the moving path P1.

As illustrated in Figure 30, in the transfer station S8, the transfer unit 25 (schematically illustrated in Figure 4) extracts a corresponding disposable cartridge 1 from each seat 17 of a group 16, standing still, and transfers it by means of a vertical movement to a corresponding seat 93 of the moving conveyor 92.

The moving conveyor 92 comprises a conveyor belt 94 which is closed in a loop around two end pulleys 95 and a plurality of drawers 96 (illustrated in Figures 31-37) which are attached to the conveyor belt 94 one after the other and each have a plurality of seats 93. Consequently, the conveyor belt 94 has an upper straight section along which the moving path P1 is defined, a lower straight section and two semi-circular portions that surround the two end pulleys 95 and join the two straight sections one with the other. At the transfer station S8, the periphery of the manufacturing drum 14 (where the groups 16 of seats 17 are located) is arranged above the two straight sections of the conveyor belt 94 so that the seats 17 of a group 16, standing still in the transfer station S8, are arranged above and vertically aligned with corresponding seats 93 of the moving conveyor 92. The transfer unit 25 is completely similar to the transfer unit 30 and therefore comprises a plurality of pushing members which are arranged above the manufacturing drum 14 and move vertically to push down the cartridges 1 housed in the seats 17 of a group 16, standing still in the transfer station S8, and a corresponding plurality of accompanying members which are arranged under the moving conveyor 92 and move vertically to accompany the lowering of the cartridges 1 coming from the seats 17 of a group 16 standing still in transfer station S8.

A control station S12 is arranged along the moving conveyor 92 in which a control device 97 is arranged, which performs an optical check of the cartridges 1 contained in the seats 93 of the moving conveyor 92. In particular, the control device 97 comprises four video cameras 98 which are arranged above the moving conveyor 92, face the underlying moving conveyor 92, and captures images of the upper portion of the cartridges 1 housed in the seats 93 of the moving conveyor 92. The four video cameras 98 operate in parallel, i.e., each video camera 98 captures images of a respective part of the cartridges 1 housed in the seats 93 of the moving conveyor 92. According to other embodiments not illustrated, the number of video cameras 98 of the control device 97 is different from four (for example, from one to ten video cameras 98 can be provided).

The manufacturing machine 9 comprises an electronic control unit 99 which supervises the operation of the manufacturing machine 9 and, among other things, analyses the images captured by the four video cameras 98 to identify any defective cartridges 1 (i.e., with visible surface defects) that will be rejected as described in the following.

The manufacturing machine 9 comprises four controlling units 100 which are arranged in succession along the moving conveyor 92 and in respective control stations (illustrated in Figures 31-37); each controlling unit 100 must perform a quality check of part of the cartridges 1 housed in the seats 93 of the moving conveyor 92 and reject any defective cartridges 1 (even when the defects have been detected by the previous control device 97). In particular, the four controlling units 100 operate in parallel, i.e., each controlling unit 100 controls a respective part of the cartridges 1 housed in the seats 93 of the moving conveyor 92.

As illustrated in Figures 31-37, each controlling unit 100 comprises a control drum 101 which is mounted so as to rotate, in a stepped manner, around a vertical rotation axis 102 perpendicular to the moving path P1. The rotation of each control drum 101 feeds four groups of seats 103 (each designed to grab a corresponding cartridge 1 from above) along an annular and horizontal control path. In particular, each annular control path begins and ends in an exchange station S13 which is arranged at the moving conveyor 92; in the exchange station S13 each seat 103 is overlapping and aligned with a seat 93 of the moving conveyor 92; in this way in the exchange station S13 a cartridge 1 can be exchanged between a seat 93 of the moving conveyor 92 and a seat 103 of the control drum 101, i.e., a cartridge 1 can be released by a seat 93 of the moving conveyor 92 to a seat 103 of the control drum 101 or vice versa. Furthermore, each annular control path passes through a control station S14 which is located along the control path downstream of the exchange station S13 and at a given distance from the moving conveyor 92; in the control station S14 a quality check is carried out on the cartridges 1 carried by a group of seats 103 which stops in the control station S14. Finally, each annular control path passes through a rejection station S15 in which any defective cartridges 1 are ejected from the seats 103 of a group which stops in the rejection station S15; consequently, the rejection station S15 is located along the control path downstream of the control station S14 and upstream of the exchange station S13.

Each control drum 101 feeds four groups of seats 103 in four different positions (arranged at 90° from one another, i.e., arranged *"crosswise"*), so that, when a (first) group of seats 103 is in exchange station S13 station, another (second) group of seats 103 is in a waiting station located along the control path downstream of the exchange station S13 and upstream of the control station S14, another (third) group of seats 103 is located in the control station S14, and a last (fourth) group of seats 103 is located in the rejection station S15.

The rotation of the control drum 101 in a stepped manner around the rotation axis 102 feeds each group of seats 103 through the exchange station S13 in which each seat 103 picks up a cartridge 1 from a seat 93 of the moving conveyor 92, through the control station S14 in which a check is carried out on the cartridge 1 carried by each seat 103, through the rejection station S15 in which any defective cartridges 1 are ejected from the seats 103, and, again, through the exchange station S13 in which each seat 103 releases the cartridge 1 to a seat 93 of the moving conveyor 92 (different from the seat 93 of the moving conveyor 92 from which the cartridge 1 has been previously picked up).

Each controlling unit 100 comprises a control device 104 which is designed as to carry out a quality check of the cartridges 1 carried by a group of seats 103 that is standing still in the control station S14.

According to a preferred embodiment illustrated in the attached figures, the control device 104 comprises two video cameras 105 which frame each cartridge 1 located in the control station S14 and are arranged on opposite sides of each cartridge 1 located in the control station S14 to be able to see the entire side surface of cartridge 1 (i.e., to be able to have a 360° view of the side surface of cartridge 1).

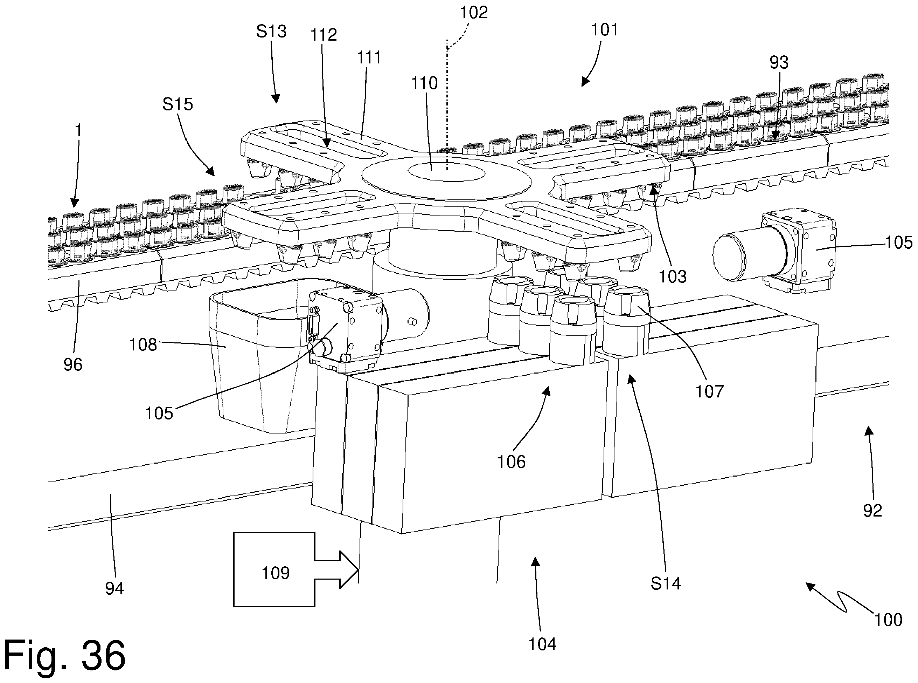

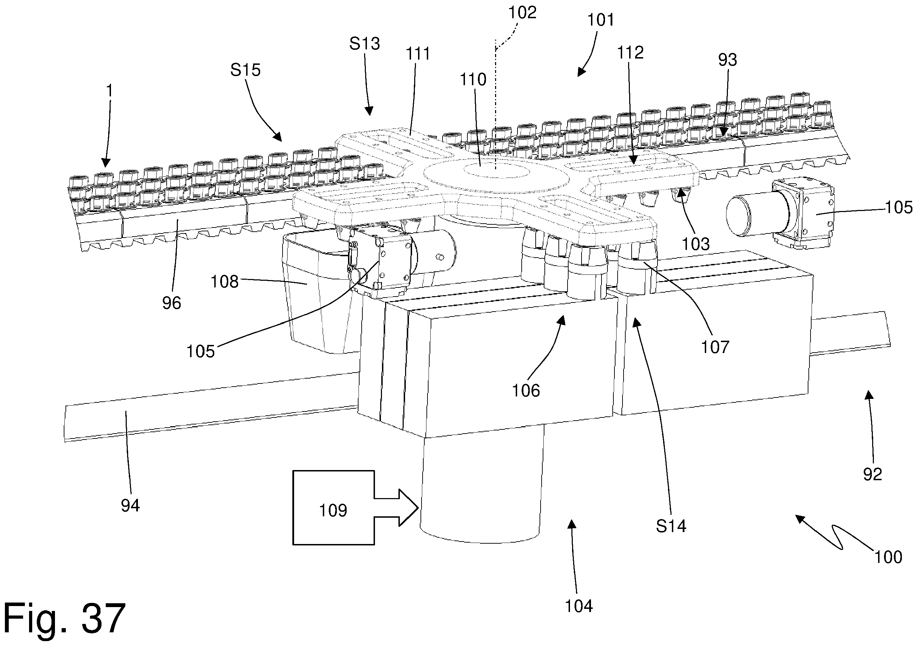

According to a preferred embodiment illustrated in the attached figures, the control device 104 also comprises a weighing member 106 (i.e., a scale) which is designed to measure the weight of each cartridge 1 located in the control station S14; in particular, the weighing member 106 comprises a group of weighers 107 (better illustrated in Figures 36 and 37) formed by a number (six) of weighers 107 equal to the number (six) of seats 103 of each group of seats 103 so that the weighing member 106 can simultaneously weigh all the cartridges 1 carried by a group of seats 103. Each weigher 107 requires a cartridge 1 to be deposited (i.e., completely released) from the corresponding seat 103; consequently, in use, each seat 103 deposits (releases) a corresponding cartridge 1 on a weigher 107, waits for the weighing of the cartridge 1 to be completed, and then picks up the same cartridge 1 previously deposited. In other words, in each controlling unit 100 the weighing member 106 is arranged under a group of seats 103 when the group of seats 103 is in the control station S14; then each seat 103, located in the control station S14, rests a cartridge 1 on a corresponding and underlying weigher 107 of the weighing member 106 and subsequently picks up the same cartridge 1 again from the underlying weigher 107 of the weighing member 106.

The rejection station S15 of each controlling unit 100 comprises a collection device 108 which is designed to receive a cartridge 1 released by a seat 103 standing still in the rejection station S15. The electronic control unit 99 is configured to control the release, in the rejection station S15, of a cartridge 1 from a corresponding seat 103 depending on the result of a weight check carried out on the cartridge 1 by the weighing member 106 of the control device 104, depending on the result of an optical check carried out on the cartridge 1 by the video cameras 105 of the control device 104, and also a function of the result of an optical check carried out on the cartridge 1 by a video camera 98 of the control device 97.

According to a preferred embodiment, the results of a weight check carried out on the cartridges 1 by the four weighing members 106 are not only used to reject (in the corresponding rejection stations S15) the non-compliant cartridges 1, but are also used to adjust in feedback the quantity released in the filling units 19; that is, the electronic control unit 99 is configured to adjust the quantity released by the filling units 19 depending on a mean value of a weight of the cartridges 1 detected by the four weighing members 106. For example, if the electronic control unit 99 detects that the mean value of a weight of the cartridges 1 detected by the four weighing members 106 is greater than a desired value, then the electronic control unit 99 adjusts the filling units 19 to reduce the quantity of tobacco that is dosed in each cartridge 1 and vice versa.

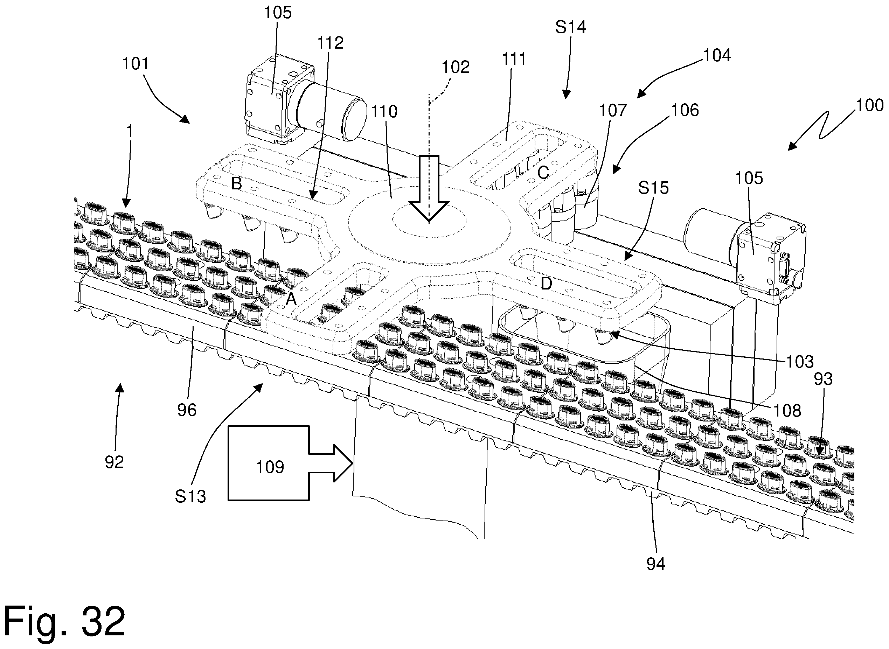

According to a preferred embodiment illustrated in the attached figures, each control drum 101 is mounted so as to rotate, in a stepped manner, around the rotation axis 102 and is also mounted axially movable so as to vertically translate between a raised position (illustrated in Figures 31, 33, 35 and 36) in which the seats 103 in the exchange station S13 are separate from the underlying seats 93 of the moving conveyor 92 so as not to engage the cartridges 1 carried by the seats 93 (and therefore allow the movement of both the moving conveyor 92 and the control drum 101) and in which the seats 103 in the control station S14 are separated by underlying weighers 107 of the weighing member 106 so as not to engage the weighers 107 (and therefore allow the movement of the control drum 101) and a lowered position (illustrated in Figures 32, 34 and 37) in which the seats 103 in the exchange station S13 are coupled to underlying seats 93 of the moving conveyor 92 to engage the cartridges 1 carried by the seats 93 (and therefore allow the exchange) and in which the seats 103 in the control station S14 are coupled to underlying weighers 107 of the weighing member 106 to engage the weighers 107 (and therefore allow the exchange).

For each control drum 101 an actuator is provided (for example comprising two separate electric motors) which is designed to impart to the control drum 101 both the horizontal rotation around the rotation axis 102, and the vertical translation movement between the raised position (illustrated in Figures 31, 33, 35 and 36) and the lowered position (illustrated in Figures 32, 34 and 37).

Consequently, each seat 103 picks up a cartridge 1 to be controlled from a seat 93 of the moving conveyor 92 and releases a controlled cartridge 1 to a seat 93 of the moving conveyor 92 only when the control drum 101 is in the lowered position (illustrated in Figures 32, 34 and 37) and cannot exchange a cartridge 1 with a seat 93 of the moving conveyor 92 when the control drum 101 is in the raised position (illustrated in Figures 31, 33, 35 and 36).

Similarly, each seat 103 rests a cartridge 1 to be weighed on a weigher 107 of the weighing member 106 and picks up a weighed cartridge 1 from a weigher 107 of the weighing member 106 only when the control drum 101 is in the lowered position (illustrated in Figures 32, 34 and 37) and cannot exchange a cartridge 1 with a weigher 107 of the weighing member 106 when the control drum 101 is in the raised position (illustrated in Figures 31, 33, 35 and 36).

Furthermore, the rotation of each control drum 101 can take place only when the control drum 101 is in the raised position (illustrated in Figures 31, 33, 35 and 36), i.e., only when the seats 103 of the control drum 101 do not interfere with the seats 93 of the moving conveyor 92, nor with the weighers 107 of the weighing member 106.

In the embodiment illustrated in the attached figures, each control drum 101 feeds with rotation steps of 90° as it comprises four distinct groups of seats 103. In particular, each control drum 101 comprises a circular central core 110 and four arms 111 which are arranged at 90° one to the other, project radially from the central core 110, give the control drum 101 a star shape, and each support a corresponding group of seats 103. In particular, each arm 111 supports two rows of seats 103 radially oriented and arranged parallel to one another and at a distance equal to twice the pitch existing between the seats 93 in the moving conveyor 92, so that, in the exchange station S13 a row of seats 103 overlaps corresponding seats 93 and the other row of seats 103 overlaps other first seats 93 located two pitches away. Each arm 111 has, at the centre, a through opening 112 which separates the two rows of seats 103. In the embodiment illustrated in the attached figures, each group of seats 103 carried by an arm 111 is formed by six seats 103 divided into two rows defined by three seats 103 each (obviously according to other embodiments the number and/or arrangement of the seats 103 of a group carried by an arm 111 could be different).

The operation of a control drum 101 of a controlling unit 100 is described in the following with reference to Figures 31-35 wherein the four arms 111 (i.e., the four groups of seats 103) are identified with letters A-D.

Initially and as illustrated in Figure 31, the group A of seats 103 is located in the exchange station S13, the group B of seats 103 is located in the waiting station, the group C of seats 103 is located in the control station S14, and the group D of seats 103 is located in the rejection station S15; the moving conveyor 92 is standing still (i.e. it is not moving), the drum 101 is standing still (i.e. it is not rotating) and is in the raised position, the seats 103 of the group A are empty (i.e. they do not hold respective cartridges 1), and the seats 103 of the group C are empty (i.e. they do not hold respective cartridges 1 which have been temporarily placed in the weighers 107 of the weighing member 106). The seats 103 of group D located in the rejection station S15 could release one or more cartridges 1 identified as defective (by the control device 104 and/or by the control device 97) to cause the cartridges 1 identified as defective to fall by gravity into the collection device 108. Subsequently and as illustrated in Figure 32, the drum 101 moves vertically (lowers) passing from the raised position to the lowered position in which the seats 103 of the group A grab corresponding cartridges 1 which are located in respective seats 93 of the moving conveyor 92 and in which the seats 103 of the group C grab corresponding cartridges 1 which had been previously placed in the weighers 107 of the weighing member 106.

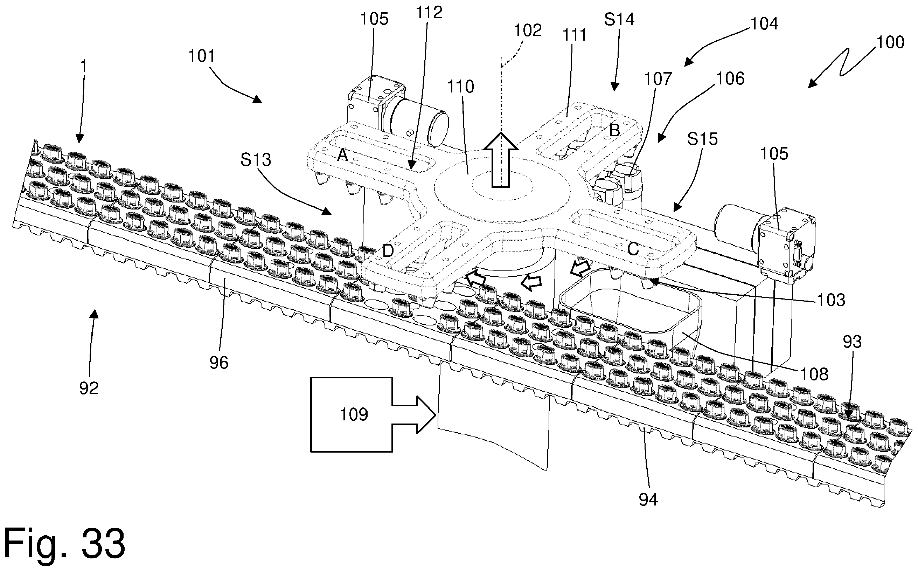

Subsequently and as illustrated in Figure 33, the drum 101 moves vertically (lifts) passing from the lowered position to the raised position and subsequently rotates clockwise by 90°; consequently, the seats 103 of the group A which have grabbed corresponding cartridges 1 in the exchange station S13 move to the waiting station, the seats 103 of the group B move to the control station S14, the seats 103 of the group C which have grabbed corresponding cartridges 1 in the control station S14 move to the rejection station S15, and the seats 103 of the group D move to the exchange station S13.

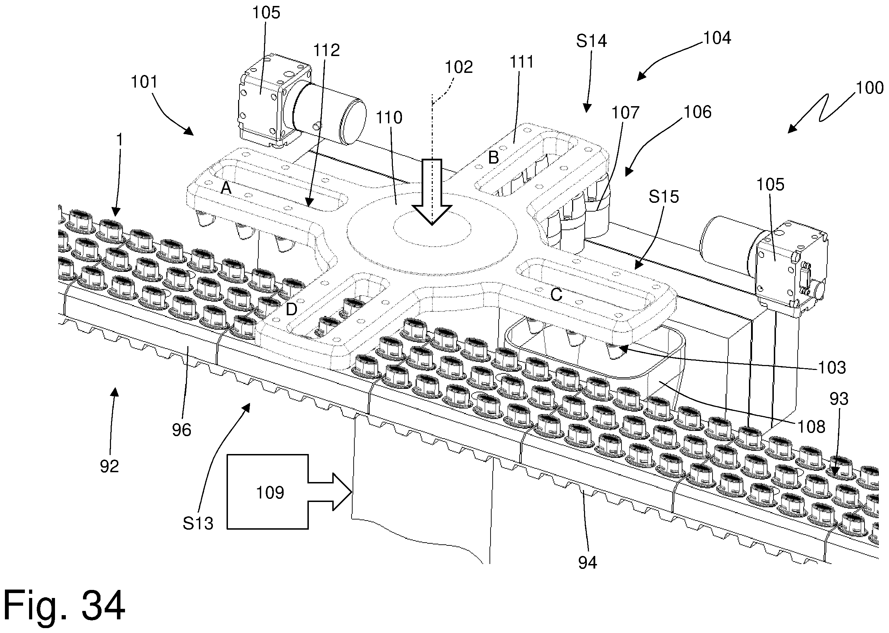

Subsequently and as illustrated in Figure 34, the drum 101 moves vertically (lowers) passing from the raised position to the lowered position in which the seats 103 of the group D release corresponding cartridges 1 in respective seats 93 of the moving conveyor 92 and in which the seats 103 of the group B place corresponding cartridges 1 in the weighers 107 of the weighing member 106.

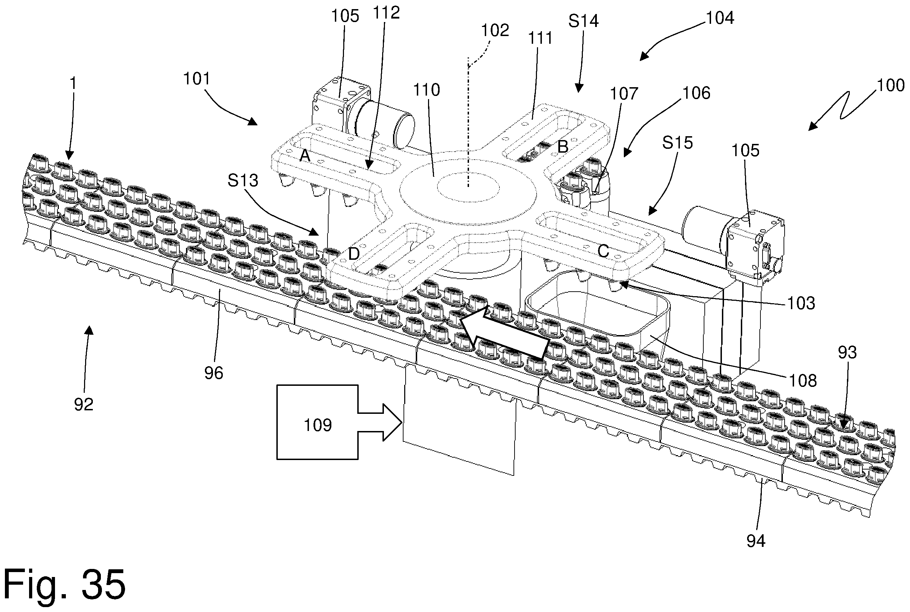

Subsequently and as illustrated in Figure 35, the drum 101 moves vertically (raises) passing from the lowered position to the raised position and therefore the moving conveyor 92 can feed by one step allowing the seats 103 of the group D to repeat the cycle described above with new cartridges 1 still to be controlled.

The controlling units 100 allow to check the cartridges 1 at a high operating speed and guarantee an optimal control (complete and accurate), without however running the risk of damaging (breaking) the cartridges 1.

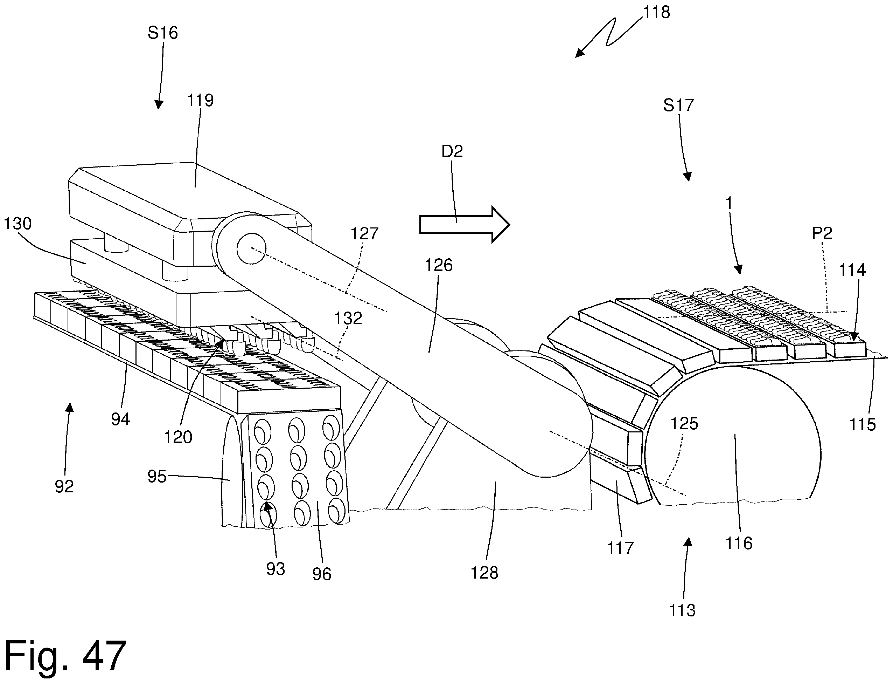

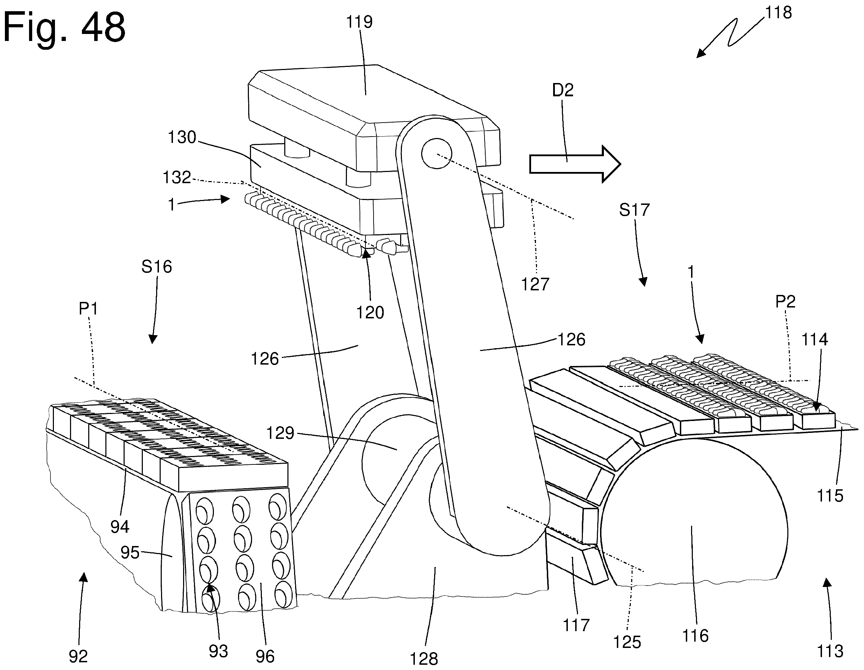

As illustrated in Figures 47 and 48, the manufacturing machine 9 comprises an outlet conveyor 113 which feeds, along a horizontal outlet path P2 and perpendicular to the moving path P1, a plurality of seats 114 each designed to house a corresponding cartridge 1. The outlet conveyor 113 comprises a conveyor belt 115 which is closed in a loop around two end pulleys 116 and a plurality of drawers 117 which are fixed to the conveyor belt 115 one after the other and each have a plurality of seats 114. Consequently, the conveyor belt 115 has an upper straight section along which the outlet path P2 is defined, a lower straight section and two semi-circular portions that surround the two end pulleys 116 and join the two straight sections to one another.

Furthermore, the manufacturing machine 9 comprises a transfer unit 118 which is designed to pick-up a group of (ninety) cartridges 1 from corresponding seats 93 of the moving conveyor 92 and to deposit the group of (ninety) cartridges 1 in respective seats 114 of the outlet conveyor 113. The transfer unit 118 comprises a gripping head 119 which is designed to grab the group of cartridges 1 by means of a group of (ninety) seats 120 each designed to grab and hold a corresponding cartridge; in particular, in the gripping head 119 the (ninety) seats 120 are arranged in three parallel rows of thirty seats 120 each to reproduce the arrangement of the seats 93 of the moving conveyor 92 and also to reproduce the arrangement of the seats 114 of the outlet conveyor 113.

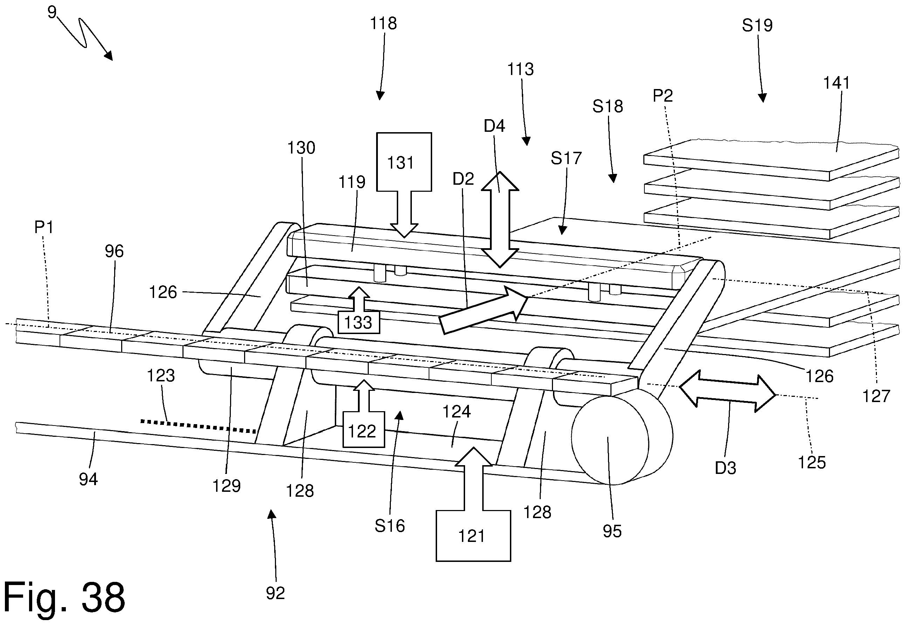

As illustrated in Figure 38, the transfer unit 118 comprises an actuator device 121 which cyclically moves the gripping head 119 between a pick-up station S16 at the moving conveyor 92 and a release station S17 at the outlet conveyor 113; in particular, the actuator device 121 cyclically moves the gripping head 119 thus making the gripping head 119 travel a circular trajectory which also provides for a movement along a moving direction D2 parallel to the outlet path P2. Furthermore, the transfer unit 118 comprises an actuator device 122 which moves the gripping head 119 along a moving direction D3 parallel to the moving path P1 and perpendicular to the moving direction D2 and in both directions, so that, when in the release station S17, the gripping head 119 is always aligned with the seats 114 of the outlet conveyor 113, and when in the pick-up station S16, the gripping head 119 is always aligned with an end portion of the seats 93 of the moving conveyor 92 containing respective cartridges 1.

In the embodiment illustrated in the attached figures, the actuator device 122 moves the gripping head 119 along the moving direction D3 with a minimum stroke which is equal to the distance between two adjacent rows of seats 93 of the moving conveyor 92; consequently, the actuator device 122 moves the gripping head 119 along the moving direction D3 with a stroke which is an integral multiple of the distance between two adjacent rows of seats 93 of the moving conveyor 92.

In the embodiment illustrated in the attached figures, the moving conveyor 92 feeds, along the moving path P1, the seats 93 with a feed pitch (distance) equal (corresponding to) to eight seats 93 (i.e. at each feed cycle the conveyor 92 moves the seats 93 along the moving path P1 by a distance corresponding to the distance existing between eight seats 93); instead, the gripping head 119 of the transfer unit 118 has ninety seats 120 arranged on three rows and then simultaneously grabs (transfers) thirty rows of cartridges 1 arranged on as many seats 93 of the moving conveyor 92. Consequently, the moving conveyor 92 feeds, along the moving path P1, the seats 93 with a feed pitch corresponding to a number (eight) of seats 93 which is not an integral submultiple of the number (thirty) of rows of cartridges 1 simultaneously grabbed by the gripping head 119.

In other words, the actuator device 121 cyclically moves the gripping head 119 along the moving direction D2 between the pick-up station S16 at the moving conveyor 92, in which the gripping head 119 grabs ninety cartridges 1 on three rows of thirty cartridges 1 each from as many seats 93 of the moving conveyor 92, and the release station S17 at the outlet conveyor 113 in which the gripping head 119 deposits ninety cartridges 1 on three rows of thirty cartridges 1 each in as many seats 114 of the outlet conveyor 113. Whereas, the actuator device 122 moves the gripping head 119 along the moving direction D3 to follow, in the pick-up station S16, the position of the end portion of the seats 93 of the moving conveyor 92 containing respective cartridges 1 (i.e., to always align the gripping head 119 with the end portion of the seats 93 of the moving conveyor 92) and to align, in the release station S17, the gripping head 119 with the seats 114 of the outlet conveyor 113. In fact, the fact that the moving conveyor 92 feeds, along the moving path P1, the seats 93 with a feed step corresponding to a number (eight) of seats 93 which is not an integral submultiple of the number (thirty) of rows of cartridges 1 simultaneously grabbed by the gripping head 119, produces at each feed step of the moving conveyor 92 a misalignment between the last pick-up position of the gripping head 119 and the end portion of the seats 93 of the moving conveyor 92 containing respective cartridges 1 and this misalignment is compensated by cyclically moving the gripping head 119 along the moving direction D3.

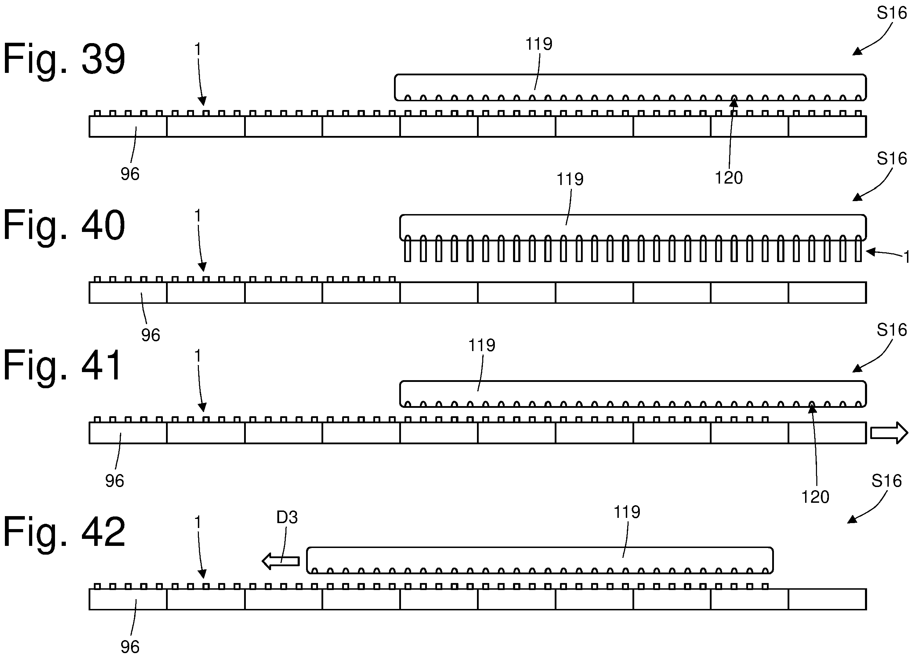

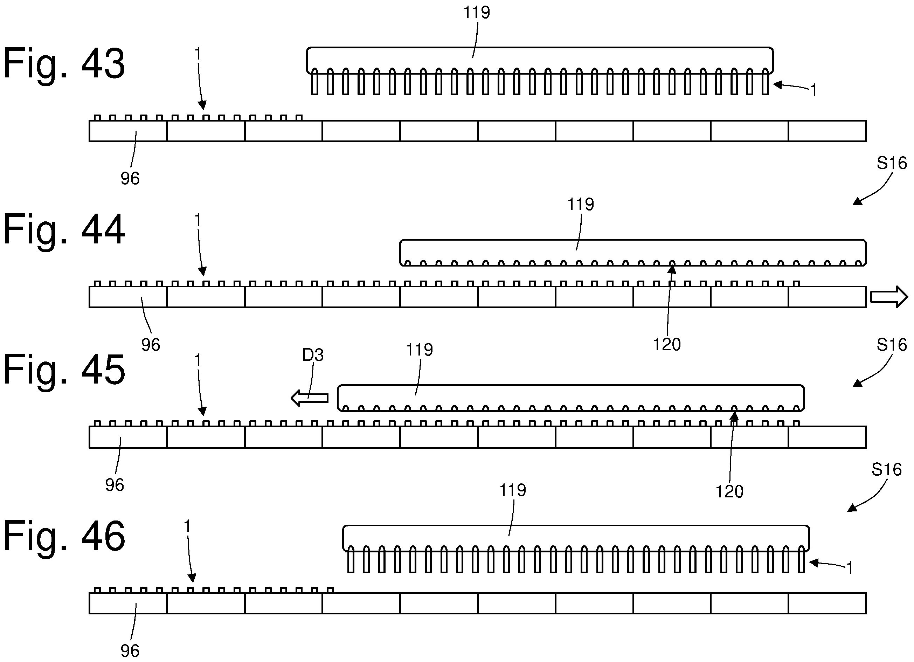

For example, in Figures 39 and 40 the gripping head 119 is illustrated, which picks up thirty rows of cartridges 1 arranged in three rows (altogether ninety cartridges 1); subsequently and as illustrated in Figure 41, the moving conveyor 92 feeds by three steps (corresponding to twenty-four rows of seats 93 housing respective cartridges 1) and therefore the gripping head 119 is no longer aligned with the seats 93 of the moving conveyor 92 containing respective cartridges 1. Consequently and as illustrated in Figure 42, the actuator device 122 moves the gripping head 119 along the moving direction D3 (with an overall stroke equal to the distance between six rows of seats 93 of the moving conveyor 92) to align the gripping head 119 with the seats 93 of the moving conveyor 92 containing respective cartridges 1; at this point and as illustrated in Figure 43, the gripping head 119 can again pick-up thirty rows of cartridges 1 arranged in three rows (altogether ninety cartridges 1). Subsequently and as illustrated in Figure 44, the moving conveyor 92 feeds by four steps (corresponding to thirty-two rows of seats 93 housing respective cartridges 1) and therefore the gripping head 119 is not aligned with the seats 93 of the moving conveyor 92 containing respective cartridges 1 (in the meantime the gripping head 119 has been realigned with the seats 114 of the outlet conveyor 113 in the release station S8); consequently and as illustrated in Figure 45, the actuator device 122 moves the gripping head 119 along the moving direction D3 (with an overall stroke equal to the distance between four rows of seats 93 of the moving conveyor 92) to align the head 119 with the seats 93 of the moving conveyor 92 containing respective cartridges 1. At this point and as illustrated in Figure 46, the gripping head 119 can again pick-up thirty rows of cartridges 1 arranged in three rows (altogether ninety cartridges 1) and the cycle begins again.

As better illustrated in Figure 38, the transfer unit 118 comprises a linear guide 123 which is arranged parallel to the moving direction D3 and a slide 124 which is mounted slidable on the guide 123, supports the gripping head 119, and is pushed along the guide 123 by the actuator device 122 (which could comprise an electric motor mechanically coupled to the slide 124 by means of a rack mechanism).

According to a preferred embodiment, the gripping head 119 rotates around a rotation axis 125 parallel to the moving path P1 and perpendicular to the outlet path P2 to move from the pick-up station S16 to the release station S17. As better illustrated in Figure 38, the transfer unit 118 comprises a pair of support arms 126, each of which is hinged at one end so as to rotate around the rotation axis 125 and at the opposite end supports the gripping head 119 in a rotatable manner to allow the gripping head 119 to rotate, relative to the support arm 126, around a rotation axis 127 parallel to the rotation axis 125. In particular, the actuator device 121 is capable of imparting a rotation to the support arm 126 around the rotation axis 125 and is capable of imparting an equal and opposite rotation to the gripping head 119 around the rotation axis 127 to maintain gripping head 119 always parallel to itself. According to a possible embodiment, the actuator device 121 comprises an electric motor which directly transmits the rotary movement to the support arms 126; furthermore, the actuator device 121 comprises a transmission (for example a toothed belt) which is arranged inside at least one support arm 126 and also transmits the rotation to the gripping head 119 in order to always keep the gripping head 119 parallel to itself.

As illustrated in Figure 38, two supports 128 are fixed in a cantilever manner on the slide 124 at the top of which a shaft 129 is hinged to rotate around the rotation axis 125, at the ends of which the two support arms 126 are rigidly mounted; the actuator device 121 rotates the shaft 129 around the rotation axis 125.

According to a preferred embodiment better illustrated in Figure 38, the transfer unit 118 comprises a support plate 130 which supports the plurality of (ninety) seats 120 each designed to house a corresponding cartridge 1 and is slidably mounted on the gripping head 119 to slide along a vertical moving direction D4 and perpendicular to both moving directions D2 and D3 between an exchange position (not illustrated) in which the support plate 130 is further away from the gripping head 119 and a movement position (illustrated in Figures 47 and 48) in which the support plate 130 is closer to the gripping head 119. An actuator device 131 (typically provided with an electric motor) is provided, which is designed to arrange the support plate 130 in the exchange position (not illustrated) when the gripping head 119 is in the pick-up station S16 or in the release station S17 (i.e., to pick-up or release the cartridges 1) and is designed to arrange the support plate 130 in the movement position when the gripping head 119 moves between the pick-up station S16 and the release station S17. In other words, at the moment of the pick-up of the cartridges 1 and at the moment of the release of the cartridges 1, the seats 120 carried by the support plate 130 perform a vertical movement along the moving direction D4 (which is perpendicular to the conveyors 93 and 113) .

According to a preferred embodiment better illustrated in Figures 47 and 48, the seats 120 are mounted so as to rotate on the support plate 130 so as to rotate around a rotation axis 132 in order to change the orientation of the corresponding cartridge 1 (i.e., to rotate by 90° each cartridge 1) during path from the pick-up station S16 to the release station S17. An actuator device 133 is provided (schematically illustrated in Figure 38) which is designed to rotate the seats 120 by 90° around the rotation axis 132 when the gripping head 119 moves between the pick-up station S16 and the release station S17.

The transfer unit 118 allows to effectively transfer the cartridges 1 from the moving conveyor 92 to the outlet conveyor 113 (i.e., without losing or damaging the cartridges 1) and efficiently (i.e., at a high operating speed). Furthermore, the transfer unit 118 allows to cope with the different feed steps of the outlet conveyors 92 and 113 due to the cyclic movement of the gripping head 119 along the moving direction D3.

The outlet conveyor 113 represents the end part of the manufacturing machine 9 and therefore at the end of the outlet conveyor 113 the cartridges 1 leave the manufacturing machine 9.

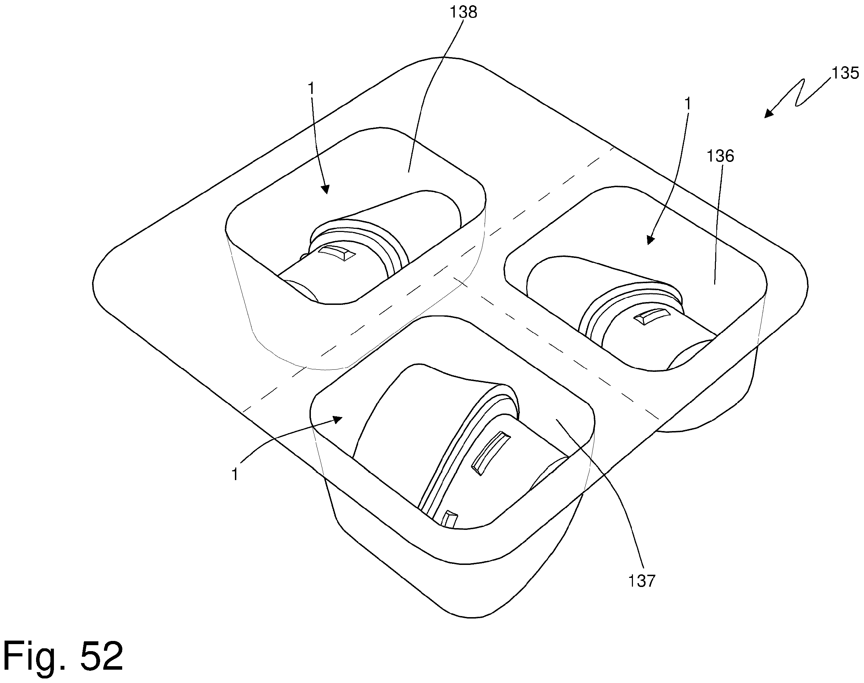

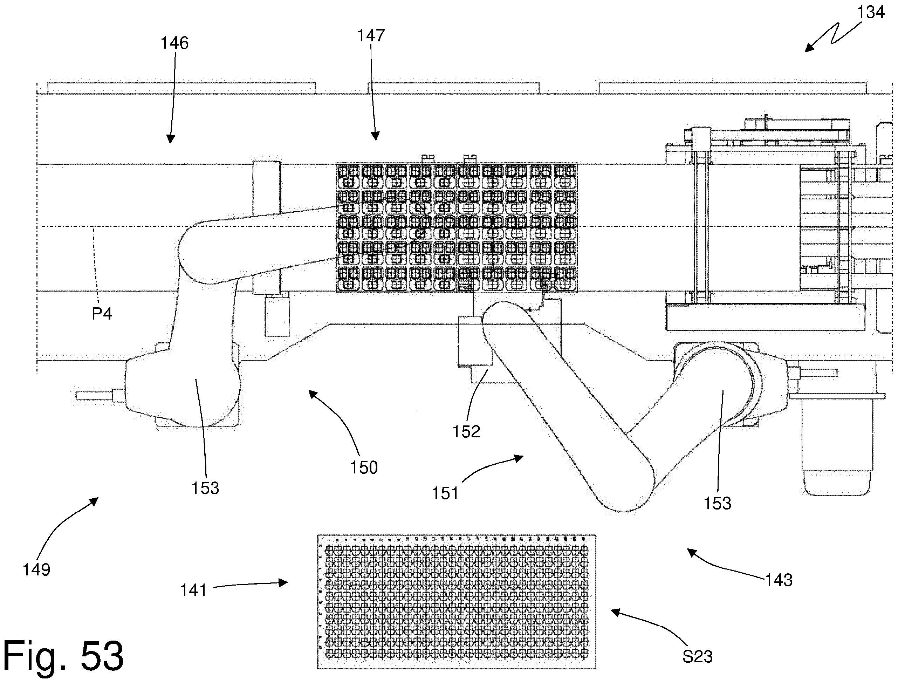

As illustrated in Figure 53, downstream of the manufacturing machine 9 a packaging (blistering) machine 134 is provided, in which groups of cartridges 1 are inserted in respective blister packs 135 (one of which is illustrated in Figure 52). As illustrated in Figure 52, each blister pack 135 comprises three pockets 136, 137 and 138, which are designed to house three corresponding cartridges 1 and are oriented differently from one another to receive the three corresponding cartridges 1 oriented differently from one another; in particular, in each blister pack 135 the two pockets 136 and 137 are arranged side by side and have the same orientation while the pocket 138 is arranged *"head first"* above the other two pockets 136 and 137 and has an orthogonal orientation relative to the two other pockets 136 and 137. The blister pack 135 illustrated in Figure 52 is incomplete as it is still devoid of a closing sheet which is welded (glued) to close (seal) the three pockets 136, 137 and 138.

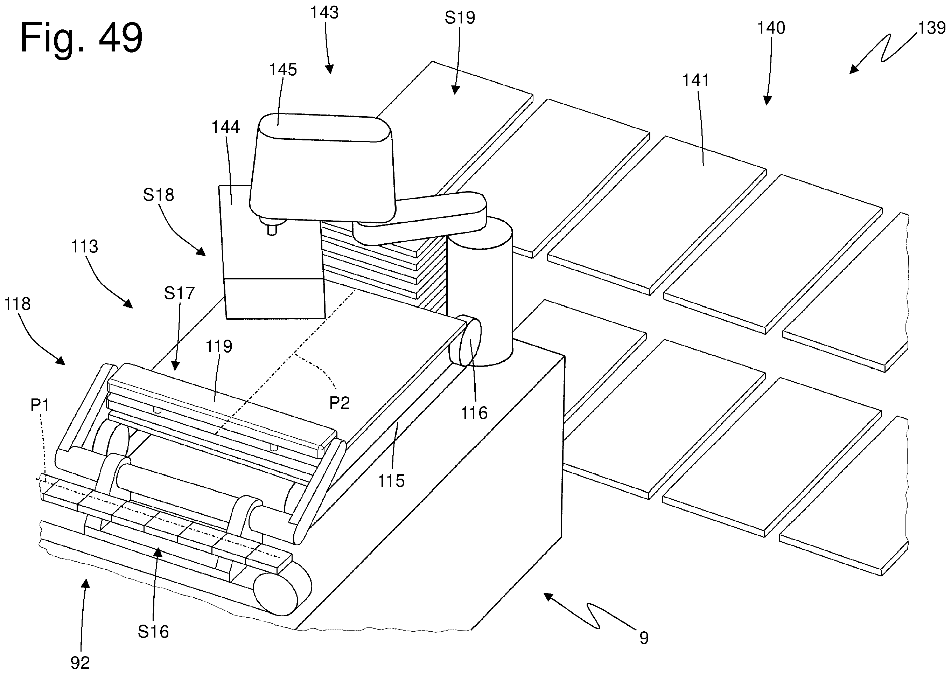

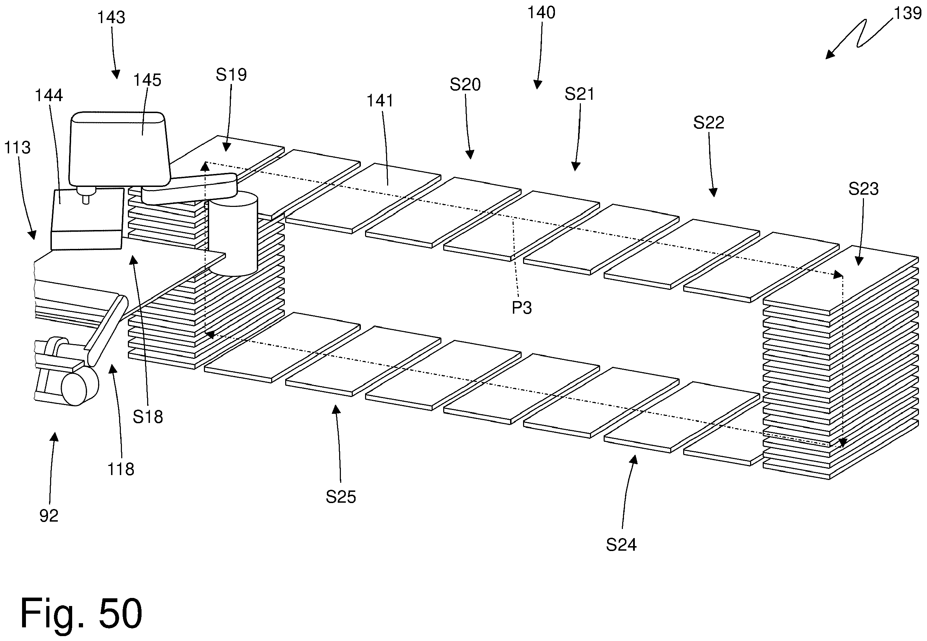

As illustrated in Figures 49 and 50, an intermediate store 139 is interposed between the manufacturing machine 9 and the packaging machine 134, the store has the function of *"storage"* to store some of the cartridges 1 produced by the manufacturing machine 9 when the manufacturing machine 9 is operating faster than the packaging machine 134 and to release some of the previously stored cartridges 1 when the manufacturing machine 9 is operating slower than the packaging machine 134.

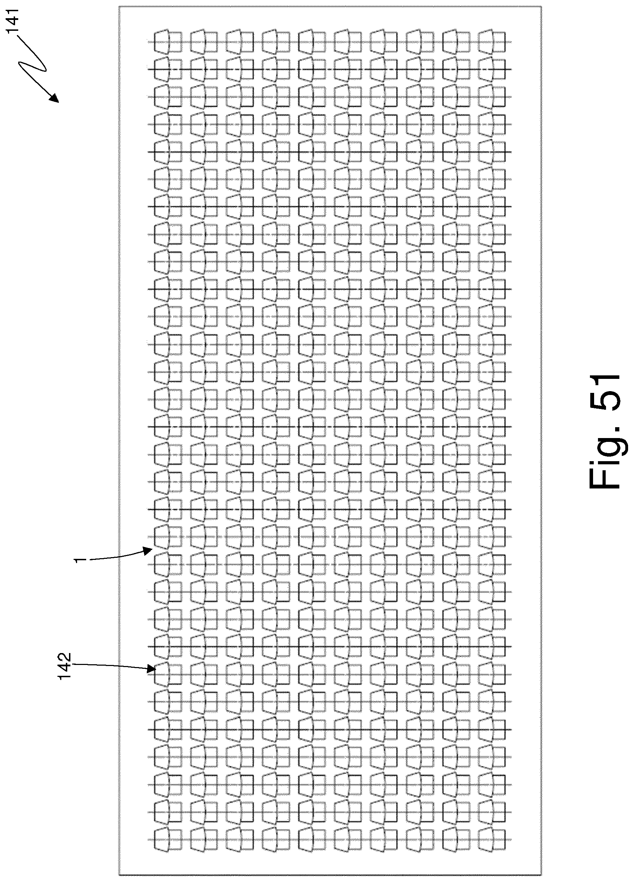

The intermediate store 139 comprises a feeding conveyor 140 which cyclically moves along an annular feed path P3 a plurality of trays 141 (better illustrated in Figure 51), each of which having a plurality of seats 142, each designed to house a corresponding cartridge 1. As better illustrated in Figure 51, in each tray 141 all the seats 142 (which house the cartridges 1) all have the same orientation; that is, all the cartridges 1 housed in the seats 142 of a tray 141 all have the same orientation and are all parallel to one another.

As illustrated in Figure 50, along the annular feed path P3 of the feeding conveyor 140 the following are arranged in succession: an inlet station S19 in which the cartridges 1 are inserted into the seats 142 of a tray 141 standing still in the inlet station S19, a pick-up station S20 in which a full tray 141 (of cartridges 1) can be picked up from the feeding conveyor 140 to be inserted into a vertical buffer of the *"FIFO"* type, a reinsertion station S21 in which a full tray 141 (of cartridges 1) can be reinserted into the feeding conveyor 140 from the vertical buffer in which it was previously placed, a rejection station S22 in which an incomplete tray 141 (i.e. having empty seats 142 without respective cartridges 1) can be rejected and possibly replaced with a full and complete tray 141 (i.e. in which all the seats 142 contain respective cartridges 1), an outlet station S23 in which the cartridges 1 are housed in the seats 142 of a tray 141 standing still in the outlet station S23 are picked up and fed to the packaging machine 134 (in the manner described in the following), a replenishment station S24 in which any trays 141 removed in the rejection station S22 are inserted again into the feeding conveyor 140 after being emptied, and an insertion station S25 in which empty trays 141 can be inserted into the feeding conveyor 140 when necessary.

As illustrated in Figure 49, a transfer unit 143 is provided which is arranged between a terminal station S18 of the outlet conveyor 113 and the inlet station S19 of the feeding conveyor 140. The transfer unit 143 comprises a gripping head 144 which is designed to grab and hold a plurality of cartridges 1 and an actuator 145 (in particular a robot arm) which cyclically moves the gripping head 144 between the terminal station S18 in which the gripping head 144 picks up the cartridges 1 from the seats 114 of the outlet conveyor 113 and the inlet station S19 in which the gripping head 144 releases the cartridges 1 to the seats 142 of a tray 141 moved by the feeding conveyor 140.

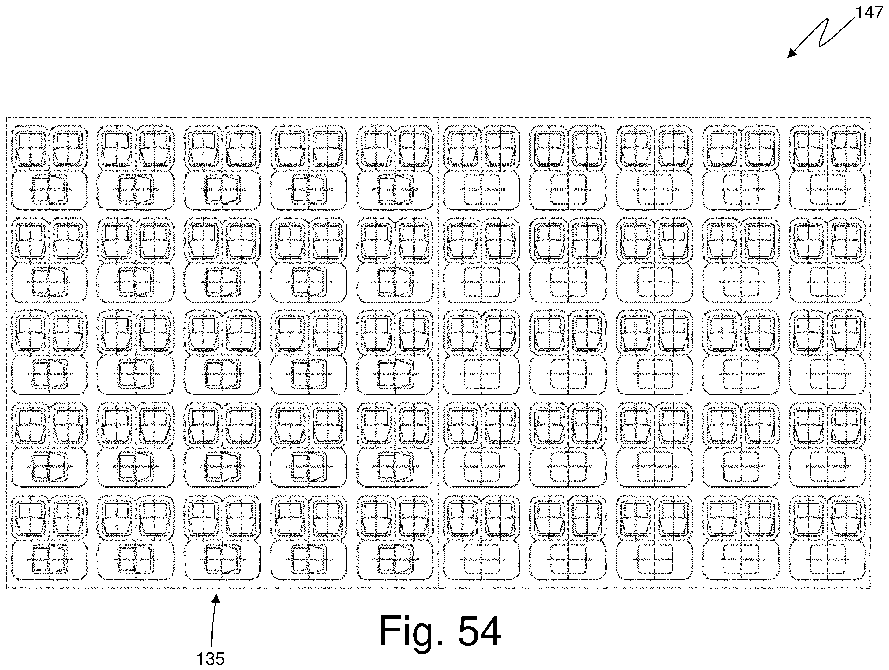

As illustrated in Figure 53, the packaging machine 134 comprises a packaging conveyor 146 which feeds along a horizontal and straight packaging path P4 a band (strip) 147 of plastic material (better illustrated in Figure 54) in which blister 1 packs 135 are obtained; i.e., the blister packs 135 form an integral part of the plastic band 147 which has not yet been discretized into the individual blister packs 135. As better illustrated in Figure 54, in the band 147 of material the blister packs 135 all have the same orientation and are all parallel to one another.

As illustrated in Figure 53, the packaging machine 134 comprises a transfer unit 149 designed to pick-up the cartridges 1 from the seats 142 of the trays 141 carried by the feeding conveyor 140 and to deposit them in the pockets 136, 137 and 138 of respective blister packs 135 which form part of the band 147 of plastic material carried by the packaging conveyor 146. The transfer unit 149 comprises a transferring device 150 designed to pick-up a plurality of cartridges 1 (for example fifty cartridges 1) from respective seats 142 of a tray 141 carried by the feeding conveyor 140 and to deposit the plurality of cartridges 1 with a first orientation in the pockets 136 and 137 of respective blister packs 135 which form part of the band 147 of plastic material carried by the packaging conveyor 146. Furthermore, the transfer unit 149 comprises a transferring device 151 which is autonomous and independent of the transferring device 150 and is designed to pick-up a plurality of cartridges 1 (for example twenty-five cartridges 1) from a seat 142 of a tray 141 carried by the feeding conveyor 140 and to deposit the plurality of cartridges 1 with a second orientation different from the first orientation in the pockets 138 of respective blister packs 135 which form part of the band 147 of plastic material carried by the packaging conveyor 146. In particular, the cartridges 1 housed in the seats 142 of the trays 141 carried by the feeding conveyor 140 have the first orientation and a same pitch (i.e. the same first orientation of the cartridges 1 in the pockets 136 and 137 of the respective blister packs 135 housed in seats 148 of a tray 147 carried by the packaging conveyor 146); consequently, the transferring device 150 does not change the orientation and the pitch of a cartridge 1 during the transfer from a seat 142 of a tray 141 carried by the feeding conveyor 140 to a pocket 136 or 137 of a respective blister pack 135 which forms part of the band 147 of plastic material carried by the packaging conveyor 146. Instead, the transferring device 151 changes the orientation and pitch of a cartridge 1 during the transfer from a seat 142 of a tray 141 carried by the feeding conveyor 140 to a pocket 138 of a respective housed blister pack 135 which is part of the band 147 of plastic material carried by the packaging conveyor 146; in particular, the transferring device 151 rotates a cartridge 1 by 90° during the transfer from a seat 142 of a tray 141 carried by the feeding conveyor 140 to a pocket 138 of a respective blister pack 135 which is part of the band 147 of plastic material carried by the packaging conveyor 146.

According to a preferred embodiment illustrated in the attached Figures, the two transferring devices 150 and 151 are twin devices and each comprise a gripping head 152 which is designed to grab and hold a plurality of cartridges 1 from a seat 142 of a tray 141 carried by the conveyor 140, and an actuator 153 (preferably formed by a robot arm) which moves the gripping head 152 between the packaging conveyor 146 and the feeding conveyor 140.

According to a preferred embodiment, the transferring device 150 is designed to pick-up the cartridges 1 from seats 142 located in a first pick-up area, while the transferring device 151 is designed to pick-up the cartridges 1 from seats 142 located in a second pick-up area which is separate from the first pick-up area and is arranged beside the first pick-up area. Similarly, the transferring device 150 is designed to release the cartridges 1 in blister packs 135 which are located in a first release area, while the transferring device 151 is designed to release the cartridges 1 in blister packs 135 which are located in a second release area which is separate from the first release area and is located next to the first release area. In this way, the two transferring devices 150 and 151 can operate simultaneously without *"colliding"* one with the other as they pick-up and release the cartridges in side by side and not overlapping areas.

According to a preferred embodiment, the two pick-up areas divide a same tray 141 into two parts, while the two release areas involve sectors of the band 147 of plastic material which are different and are arranged in different positions along the packaging path P4.

As previously stated, each blister pack 135 comprises two pockets 136 and 137 both having the same first orientation and one single pocket 138 having the second orientation different from (orthogonal to) the first orientation; the transferring device 150 is designed to simultaneously transfer two cartridges 1 having the first orientation into the two pockets 136 and 137 of a same blister pack 135, while the transferring device 151 is designed to transfer one single cartridge 1 having the second orientation into the pocket 138 of a blister pack 135.

The transfer unit 143 allows the cartridges 1 to be inserted into the pockets 136, 137 and 138 of the blister packs 135 effectively (i.e., without losing or damaging the cartridges 1 and without damaging the blister packs 135) and efficiently (i.e., at a high operating speed).

The embodiments described here can be combined with each other without departing from the scope of the present invention.

The manufacturing machine 9 described above has numerous advantages.

In the first place, the manufacturing machine 9 described above allows to reach high hourly productivity (the nominal hourly productivity of the manufacturing machine 9 is of the order of 1,400-1,600 disposable cartridges 1 per minute) while ensuring a high-quality standard. This result is obtained, among other things, thanks to a particularly gentle, but at the same time very effective and efficient treatment, of the cartridges 1, of the tubular casings 2 and of the upper walls 6 which are never excessively mechanically stressed and at the same time always have a known and given position.

Furthermore, the manufacturing machine 9 is particularly compact and allows an operator who is near the manufacturing machine 9 to reach with his own hands all the various parts of the manufacturing machine 9 without having to carry out unnatural movements.

Finally, the manufacturing machine 9 is relatively simple and inexpensive to manufacture.

## Claims

1. A manufacturing machine (9) for the production of disposable cartridges (1); each disposable cartridge (1) comprising a tubular casing (2) and a quantity (4) of product housed in the tubular casing (2); the manufacturing machine (9) comprising:
a manufacturing drum (10) which is mounted so as to rotate, in a stepped manner, around a first vertical rotation axis (11) and
supports at least one group (12) of first seats (13), each designed to house a corresponding tubular casing (2); and
a feeding unit (18), which is designed to insert a plurality of tubular casings (2) into respective first seats (13) of the group (12) of first seats (13) standing still in a feeding station (S1); the feeding unit (18) comprising:
a feeding drum (25), which is mounted so as to rotate, in a stepped manner, around a second vertical rotation axis (26) parallel to the first rotation axis (11), supports at least one group (27) of second seats (28), each designed to house a corresponding tubular casing (2), and at the feeding station (S1) partially overlaps the manufacturing drum (10), so that, in the feeding station (S1) each second seat (28) is vertically aligned to a corresponding first seat (13);
a first transfer device (29) which is arranged in the feeding station (S1) and is designed to transfer the tubular casings (2) from the second seats (28) to the first seats (13) by means of a vertical movement;
a second transfer device (30), which is arranged in a first transfer station (S9) and is designed to transfer the tubular casings (2) to the second seats (28) by means of a vertical movement; and a first conveyor (33), which receives the tubular casings (2) in a second transfer station (S10) and releases the tubular casings (2) to the second seats (28) in the first transfer station (S9); the manufacturing machine (9) being **characterized in that** the feeding unit (18) comprises:
a second conveyor (39) which feeds through a third transfer station (S11) a succession of trays (40), each provided with a plurality of fourth seats (41), each designed to house a corresponding tubular casing (2); and
a third transfer device (42), which picks up a plurality of tubular casings (2) from respective fourth seats (41) of a tray (40) standing still in the third transfer station (S11) and releases the plurality of tubular casings (2) in respective third seats (35) of the first conveyor (33) standing still in the second transfer station (S10).

2. The manufacturing machine (9) according to claim 1, wherein, in the feeding station (S1), the feeding drum (25) is arranged under the manufacturing drum (10) and the first transfer device (29) comprises:
a group of first pushing members (31), which are arranged in the feeding station (S1) under the feeding drum (25) and are vertically movable so as to push the tubular casings (2) from the second seats (28) to the first seats (13); and
a group of first accompanying members (32), which are opposite the first pushing members (31), are arranged above the manufacturing drum (10), and are vertically movable so as to be inserted into the first seats (13) and accompany the ascent of the tubular casings (2) from the second seats (28).

3. The manufacturing machine (9) according to claim 1 or 2, wherein the first conveyor (33) causes the tubular casings (2) to make a 180° vertical rotation.

4. The manufacturing machine (9) according to claim 1, 2 or 3, wherein:
the first conveyor (33) comprises a conveyor belt (34) which is closed in a loop around two end pulleys and supports a plurality of third seats (35), each designed to house a corresponding tubular casing (2);
the conveyor belt (34) has an upper straight section, a lower straight section and two semi-circular segments which surround the two end pulleys and join the two straight sections to one another; and
the second transfer station (S10) is arranged along the upper straight section of the conveyor belt (34), whereas the first transfer station (S9) is arranged along the lower straight section of the conveyor belt (34).

5. The manufacturing machine (9) according to claim 4, wherein the first conveyor (33) comprises a semi-circular side board (36), which is arranged around an end pulley located between the second transfer station (S10) and the first transfer station (S9) and externally surrounds the conveyor belt (34) in order to keep the tubular casings (2) inside the corresponding third seats (35).

6. The manufacturing machine (9) according to claim 4 or 5, wherein, in the first transfer station (S9), the feeding drum (25) is arranged under the first conveyor (33) and the second transfer device (30) comprises:
a group of second pushing members (37), which are arranged in the first transfer station (S9) between the two straight branches and are vertically movable so as to push the tubular casings (2) from the third seats (35) to the second seats (28); and
a group of second accompanying members (38), which are opposite the second pushing members (37), are arranged under the feeding drum (25) and are vertically movable so as to be inserted into the second seats (28) and accompany the descent of the tubular casings (2) from the third seats (35).

7. The manufacturing machine (9) according to one of the claims from 1 to 6, wherein the third transfer device (42) comprises: at least one suction gripping head (43) which is designed to hold a plurality of tubular casings (2) by way of suction; and an actuator (44), which cyclically moves the suction gripping head (43) between the second transfer station (S10) and the third transfer station (S11).

8. The manufacturing machine (9) according to claim 7, wherein the actuator (44) is designed to rotate the suction gripping head (43) around a third of vertical rotation axis (45) to cyclically move the suction gripping head (43) between the second transfer station (S10) and the third transfer station (S11) and the actuator (44) is designed to vertically translate the suction gripping head (43) so as to cyclically lower and lift the suction gripping head (43).

9. The manufacturing machine (9) according to one of the claims from 1 to 8, wherein the feeding unit (18) comprises:
a first store (46), which is arranged at the beginning of the second conveyor (39), is designed to contain at least one stack of full trays (40) and is designed to lift and lower the stack of full trays (40) so as to always keep the full tray (40) at the top at the same vertical height as the second conveyor (39); and
a second store (47), which is arranged at the end of the second conveyor (39), is designed to contain at least one stack of empty trays (40) and is designed to lift and lower the stack of empty trays (40) so as to always keep the empty tray (40) at the top at the same vertical height as the second conveyor (39).

10. The manufacturing machine (9) according to one of the claims from 1 to 9, wherein the feeding unit (18) comprises a clamp (48), which is arranged downstream of the third transfer station (S11) and are designed to pull a tray (40) out of the third transfer station (S11).

11. The manufacturing machine (9) according to one of the claims from 1 to 10, wherein the second conveyor (39) comprises a locking and centring member (49), which is arranged at the third transfer station (S11) and is provided of at least one pin (50) which is movable so as to be inserted into a corresponding recess (51) present in each tray (40) standing still in the third transfer station (S11).

12. The manufacturing machine (9) according to one of the claims from 1 to 11, wherein the first transfer station (S9) is arranged at approximately 150°-180° from the feeding station (S1) relative to the second rotation axis (26).

13. A manufacturing method for the production of disposable cartridges (1); each disposable cartridge (1) comprising a tubular casing (2) and a quantity (4) of product housed in the tubular casing (2); the manufacturing method comprising the steps of:
rotating, in a stepped manner and around a first vertical rotation axis (11), a manufacturing drum (10), which supports at least one group (12) of first seats (13), each designed to house a corresponding tubular casing (2);
inserting, by means of a feeding unit (18), a plurality of tubular casings (2) into respective first seats (13) of the group (12) of first seats (13) standing still in a feeding station (S1);
rotating, in a stepped manner and around a second vertical rotation axis (26) parallel to the first rotation axis (11), a feeding drum (25), which supports at least one group (27) of second seats (28), each designed to house a corresponding tubular casing (2), and at the feeding station (S1) partially overlaps the manufacturing drum (10), so that, in the feeding station (S1) each second seat (28) is vertically aligned to a corresponding first seat (13);
transferring the tubular casings (2) from the second seats (28) to the first seats (13) by means of a vertical movement caused by a first transfer device (29), which is arranged in the feeding station (S1);
transferring the tubular casings (2) to the second seats (28) by means of a vertical movement caused by a second transfer device (30), which is arranged in a transfer station (S9); and
receiving the tubular casings (2) in a second transfer station (S10) and releasing the tubular casings (2) to the second seats (28) in the first transfer station (S9) by a first conveyor (33) being comprised by the feeding unit (18);
the manufacturing method being **characterized in that** it comprises
the further steps of:
feeding, by a second conveyor (39), through a third transfer station (S11) a succession of trays (40), each provided with a plurality of fourth seats (41), each designed to house a corresponding tubular casing (2); and
picking up, by a third transfer device (42), a plurality of tubular casings (2) from respective fourth seats (41) of a tray (40) standing still in the third transfer station (S11) and releasing the plurality of tubular casings (2) in respective third seats (35) of the first conveyor (33) standing still in the second transfer station (S10).

## Patentansprüche

1. Produktionsmaschine (9) zur Produktion von Wegwerfpatronen (1); wobei jede Wegwerfpatrone (1) ein rohrförmiges Gehäuse (2) und eine Menge (4) an Produkt, das im rohrförmigen Gehäuse (2) aufgenommen ist, umfasst; wobei die Produktionsmaschine (9) umfasst:
eine Produktionstrommel (10), die so montiert ist, dass sie sich schrittweise um eine erste vertikale Drehachse (11) dreht und wenigstens eine Gruppe (12) erster Aufnahmen (13) hält, wovon jede ausgelegt ist, ein entsprechendes rohrförmiges Gehäuse (2) aufzunehmen; und
eine Zuführeinheit (18), die ausgelegt ist, mehrere rohrförmige Gehäuse (2) in entsprechende erste Aufnahmen (13) der Gruppe (12) erster Aufnahmen (13), die in einer Zuführstation (S1) stillstehen, einzusetzen; wobei die Zuführeinheit (18) umfasst:
eine Zuführtrommel (25), die so montiert ist, dass sie sich schrittweise um eine zweite vertikale Drehachse (26) parallel zur ersten Drehachse (11) dreht, wenigstens eine Gruppe (27) zweiter Aufnahmen (28) hält, wovon jede ausgelegt ist, ein entsprechendes rohrförmiges Gehäuse (2) aufzunehmen, und bei der Zuführstation (S1) teilweise mit der Produktionstrommel (10) überlappt, so dass in der Zuführstation (S1) jede zweite Aufnahme (28) auf eine entsprechende erste Aufnahme (13) vertikal ausgerichtet ist;
eine erste Transfervorrichtung (29), die in der Zuführstation (S1) angeordnet ist und ausgelegt ist, die rohrförmigen Gehäuse (2) von den zweiten Aufnahmen (28) mittels einer vertikalen Bewegung zu den ersten Aufnahmen (13) zu transferieren;
eine zweite Transfervorrichtung (30), die in einer ersten Transferstation (S9) angeordnet ist und ausgelegt ist, die rohrförmigen Gehäuse (2) mittels einer vertikalen Bewegung zu den zweiten Aufnahmen (28) zu transferieren; und
eine erste Fördereinheit (33), die die rohrförmigen Gehäuse (2) in einer zweiten Transferstation (S10) aufnimmt und die rohrförmigen Gehäuse (2) in der ersten Transferstation (S9) für die zweiten Aufnahmen (28) freigibt;
wobei die Produktionsmaschine (9) **dadurch gekennzeichnet ist, dass** die Zuführeinheit (18) umfasst:
eine zweite Fördereinheit (39), die durch eine dritte Transferstation (S11) eine Folge von Einsätzen (40) zuführt, wovon jeder mit mehreren vierten Aufnahmen (41) versehen ist, wovon jede ausgelegt ist, ein entsprechendes rohrförmiges Gehäuse (2) aufzunehmen; und
eine dritte Transfervorrichtung (42), die mehrere rohrförmige Gehäuse (2) aus entsprechenden vierten Aufnahmen (41) eines Einsatzes (40), der in der dritten Transferstation (S11) stillsteht, aufnimmt, und die mehreren rohrförmigen Gehäuse (2) in entsprechende dritte Aufnahmen (35) der ersten Fördereinheit (33) freigibt, das in der zweiten Transferstation (S10) stillsteht.

2. Produktionsmaschine (9) nach Anspruch 1, wobei in der Zuführstation (S1) die Zuführtrommel (25) unter der Produktionstrommel (10) angeordnet ist und die erste Transfervorrichtung (29) umfasst:
eine Gruppe erster Schiebeelemente (31), die in der Zuführstation (S1) unter der Zuführtrommel (25) angeordnet sind und vertikal beweglich sind, um die rohrförmigen Gehäuse (2) aus den zweiten Aufnahmen (28) zu den ersten Aufnahmen (13) zu schieben; und
eine Gruppe erster Begleitelemente (32), die gegenüber den ersten Schiebeelementen (31) liegen, die über der Produktionstrommel (10) angeordnet sind und vertikal beweglich sind, so dass sie in die ersten Aufnahmen (13) eingesetzt werden können und das Aufsteigen der rohrförmigen Gehäuse (2) aus den zweiten Aufnahmen (28) begleiten.

3. Produktionsmaschine (9) nach Anspruch 1 oder 2, wobei die erste Fördereinheit (33) bewirkt, dass die rohrförmigen Gehäuse (2) eine vertikale Drehung um 180° ausführen.

4. Produktionsmaschine (9) nach Anspruch 1, 2 oder 3, wobei:
die erste Fördereinheit (33) ein Förderband (34) umfasst, das in einer Schleife um zwei Umlenkrollen am Ende geschlossen ist und mehrere dritte Aufnahmen (35) hält, wovon jede ausgelegt ist, ein entsprechendes rohrförmiges Gehäuse (2) aufzunehmen;
das Förderband (34) ein oberes gerades Teilstück, ein unteres gerades Teilstück und zwei halbkreisförmige Segmente, die die zwei Umlenkrollen an den Enden umgeben und die zwei geraden Teilstücke miteinander verbinden, umfasst; und
die zweite Transferstation (S10) längs des oberen geraden Teilstücks des Förderbands (34) angeordnet ist, während die erste Transferstation (S9) längs des unteren geraden Teilstücks des Förderbands (34) angeordnet ist.

5. Produktionsmaschine (9) nach Anspruch 4, wobei die erste Fördereinheit (33) eine halbkreisförmige seitliche Platte (36) umfasst, die um eine Umlenkrolle am Ende angeordnet ist, die sich zwischen der zweiten Transferstation (S10) und der ersten Transferstation (S9) befindet und das Förderband (34) von außen umgibt, um die rohrförmigen Gehäuse (2) in den entsprechenden dritten Aufnahmen (35) zu halten.

6. Produktionsmaschine (9) nach Anspruch 4 oder 5, wobei in der ersten Transferstation (S9) die Zuführtrommel (25) unter der ersten Fördereinheit (33) angeordnet ist und die zweite Transfervorrichtung (30) umfasst:
eine Gruppe zweiter Schiebeelemente (37), die in der ersten Transferstation (S9) zwischen den zwei geraden Verzweigungen angeordnet sind und vertikal beweglich sind, um die rohrförmigen Gehäuse (2) von den dritten Aufnahmen (35) zu den zweiten Aufnahmen (28) zu schieben; und
eine Gruppe zweiter Begleitelemente (38), die gegenüber den zweiten Schiebeelementen (37) liegen, die unter der Zuführtrommel (25) angeordnet sind und vertikal beweglich sind, so dass sie in die zweiten Aufnahmen (28) eingesetzt werden können und das Absenken der rohrförmigen Gehäuse (2) aus den dritten Aufnahmen (35) begleiten.

7. Produktionsmaschine (9) nach einem der Ansprüche 1 bis 6, wobei die dritte Transfervorrichtung (42) umfasst:
wenigstens einen Sauggreifkopf (43), der ausgelegt ist, mehrere rohrförmige Gehäuse (2) durch Saugen zu halten; und
einen Aktuator (44), der den Sauggreifkopf (43) zwischen der zweiten Transferstation (S10) und der dritten Transferstation (S11) zyklisch bewegt.

8. Produktionsmaschine (9) nach Anspruch 7, wobei der Aktuator (44) ausgelegt ist, den Sauggreifkopf (43) um eine dritte vertikale Drehachse (45) zu drehen, um den Sauggreifkopf (43) zwischen der zweiten Transferstation (S10) und der dritten Transferstation (S11) zyklisch zu bewegen, und wobei der Aktuator (44) ausgelegt ist, den Sauggreifkopf (43) vertikal so zu verlagern, dass der Sauggreifkopf (43) zyklisch abgesenkt und angehoben wird.

9. Produktionsmaschine (9) nach einem der Ansprüche 1 bis 8, wobei die Zuführeinheit (18) umfasst:
ein erstes Magazin (46), das am Anfang der zweiten Fördereinheit (39) angeordnet ist, das so ausgelegt ist, dass es wenigstens einen Stapel voller Einsätze (40) enthält, und das ausgelegt ist, den Stapel voller Einsätze (40) anzuheben und abzusenken, so dass der volle Einsatz (40) auf der Oberseite immer auf der gleichen vertikalen Höhe wie die zweite Fördereinheit (39) gehalten wird; und
ein zweites Magazin (47), das am Ende der zweiten Fördereinheit (39) angeordnet ist, das so ausgelegt ist, dass es wenigstens einen Stapel leerer Einsätze (40) enthält, und das ausgelegt ist, den Stapel leerer Einsätze (40) anzuheben und abzusenken, so dass der leere Einsatz (40) auf der Oberseite immer auf der gleichen vertikalen Höhe wie die zweite Fördereinheit (39) gehalten wird.

10. Produktionsmaschine (9) nach einem der Ansprüche 1 bis 9, wobei die Zuführeinheit (18) eine Klemme (48) umfasst, die stromabwärts der dritten Transferstation (S11) angeordnet ist und ausgelegt ist, einen Einsatz (40) aus der dritten Transferstation (S11) zu ziehen.

11. Produktionsmaschine (9) nach einem der Ansprüche 1 bis 10, wobei die zweite Fördereinheit (39) ein Einrast- und Zentrierelement (49) umfasst, das an der dritten Transferstation (S11) angeordnet ist und aus wenigstens einem Stift (50) besteht, der beweglich ist, so dass er in eine entsprechende Vertiefung (51) eingesetzt werden kann, die in jedem Einsatz (40), der in der dritten Transferstation (S11) stillsteht, vorhanden ist.

12. Produktionsmaschine (9) nach einem der Ansprüche 1 bis 11, wobei die erste Transferstation (S9) bei etwa 150°-180° von der Zuführstation (S1) relativ zur zweiten Drehachse (26) angeordnet ist.

13. Produktionsverfahren zur Produktion von Wegwerfpatronen (1); wobei jede Wegwerfpatrone (1) ein rohrförmiges Gehäuse (2) und eine Menge (4) an Produkt, das im rohrförmigen Gehäuse (2) aufgenommen ist, umfasst; wobei das Produktionsverfahren die Schritte umfasst:
Drehen einer Produktionstrommel (10), die wenigstens eine Gruppe (12) erster Aufnahmen (13) hält, wovon jede ausgelegt ist, ein entsprechendes rohrförmiges Gehäuse (2) aufzunehmen, schrittweise und um eine erste vertikale Drehachse (11);
Einsetzen mittels einer Zuführeinheit (18) mehrerer rohrförmiger Gehäuse (2) in entsprechende erste Aufnahmen (13) der Gruppe (12) erster Aufnahmen (13), die in einer Zuführstation (S1) stillstehen;
Drehen einer Zuführtrommel (25), die wenigstens eine Gruppe (27) zweiter Aufnahmen (28) hält, wovon jede ausgelegt ist, ein entsprechendes rohrförmiges Gehäuse (2) aufzunehmen, schrittweise und um eine zweite vertikale Drehachse (26) parallel zur ersten Drehachse (11), und bei der Zuführstation (S1) teilweise mit der Produktionstrommel (10) überlappt, so dass in der Zuführstation (S1) jede zweite Aufnahme (28) auf eine entsprechende erste Aufnahme (13) vertikal ausgerichtet ist;
Transferieren der rohrförmigen Gehäuse (2) von den zweiten Aufnahmen (28) zu den ersten Aufnahmen (13) mittels einer vertikalen Bewegung, die durch eine erste Transfervorrichtung (29), die in der Zuführstation (S1) angeordnet ist, verursacht wird;
Transferieren der rohrförmigen Gehäuse (2) zu den zweiten Aufnahmen (28) mittels einer vertikalen Bewegung, die durch eine zweite Transfervorrichtung (30) verursacht wird, die in einer Transferstation (S9) angeordnet ist; und
Empfangen der rohrförmigen Gehäuse (2) in einer zweiten Transferstation (S10) und Freigeben der rohrförmigen Gehäuse (2) für die zweiten Aufnahmen (28) in der ersten Transferstation (S9) durch eine erste Fördereinheit (33), die in der Zuführeinheit (18) enthalten ist;
wobei das Produktionsverfahren **dadurch gekennzeichnet ist, dass** es die weiteren Schritte umfasst:
Zuführen mit einer zweiten Fördereinheit (39) durch eine dritte Transferstation (S11) einer Folge von Einsätzen (40), wovon jeder mit mehreren vierten Aufnahmen (41) versehen ist, wovon jede ausgelegt ist, ein entsprechendes rohrförmiges Gehäuse (2) aufzunehmen; und
Aufnehmen durch eine dritte Transfervorrichtung (42) mehrerer rohrförmiger Gehäuse (2) aus entsprechenden vierten Aufnahmen (41) eines Einsatzes (40), der in der dritten Transferstation (S11) stillsteht und die mehreren rohrförmigen Gehäuse (2) in entsprechende dritte Aufnahmen (35) der ersten Fördereinheit (33) freigibt, das in der zweiten Transferstation (S10) stillsteht.

## Revendications

1. Machine de fabrication (9) pour la production de cartouches jetables (1) ; chaque cartouche jetable (1) comprenant un boîtier tubulaire (2) et une quantité (4) de produit logé dans le boîtier tubulaire (2) ; la machine de fabrication (9) comprenant : un tambour de fabrication (10) qui est monté de manière à tourner, de manière étagée, autour d'un premier axe de rotation (11) vertical et supporte au moins un groupe (12) de premiers sièges (13), chacun conçu pour loger un boîtier tubulaire (2) correspondant; et une unité d'amenée (18), qui est conçue pour insérer une pluralité de boîtiers tubulaires (2) dans des premiers sièges (13) respectifs du groupe (12) de premiers sièges (13) se tenant immobiles dans une station d'amenée (S1) ; l'unité d'amenée (18) comprenant :
un tambour d'amenée (25), qui est monté de manière à tourner, de manière étagée, autour d'un deuxième axe de rotation (26) vertical parallèle au premier axe de rotation (11), supporte au moins un groupe (27) de deuxièmes sièges (28), chacun conçu pour loger un boîtier tubulaire (2) correspondant, et au niveau de la station d'amenée (S1) chevauche partiellement le tambour de fabrication (10), de sorte que, dans la station d'amenée (S1), chaque deuxième siège (28) est aligné verticalement par rapport à un premier siège (13) correspondant ;
un premier dispositif de transfert (29) qui est agencé dans la station d'amenée (S1) et est conçu pour transférer les boîtiers tubulaires (2) à partir des deuxièmes sièges (28) vers les premiers sièges (13) au moyen d'un mouvement vertical ;
un deuxième dispositif de transfert (30), qui est agencé dans une première station de transfert (S9) et est conçu pour transférer les boîtiers tubulaires (2) vers les deuxièmes sièges (28) au moyen d'un mouvement vertical ; et
un premier convoyeur (33),
qui reçoit les boîtiers tubulaires (2) dans une deuxième station de transfert (S10) et libère les boîtiers tubulaires (2) vers les deuxièmes sièges (28) dans la première station de transfert (S9) ;
la machine de fabrication (9) étant **caractérisée en ce que** l'unité d'amenée (18) comprend :
un deuxième convoyeur (39) qui amène à travers une troisième station de transfert (S11) une succession de plateaux (40), chacun pourvu d'une pluralité de quatrièmes sièges (41), chacun conçu pour loger un boîtier tubulaire (2) correspondant ; et
un troisième dispositif de transfert (42), qui prélève une pluralité de boîtiers tubulaires (2) à partir de quatrièmes sièges (41) respectifs d'un plateau (40) se tenant immobiles dans la troisième station de transfert (S11) et libère la pluralité de boîtiers tubulaires (2) dans des troisièmes sièges (35) respectifs du premier convoyeur (33) se tenant immobiles dans la deuxième station de transfert (S10).

2. Machine de fabrication (9) selon la revendication 1, dans laquelle, dans la station d'amenée (S1), le tambour d'amenée (25) est agencé sous le tambour de fabrication (10) et le premier dispositif de transfert (29) comprend :
un groupe de premiers éléments de poussée (31), qui sont agencés dans la station d'amenée (S1) sous le tambour d'amenée (25) et sont mobiles verticalement de manière à pousser les boîtiers tubulaires (2) à partir des deuxièmes sièges (28) vers les premiers sièges (13) ; et
un groupe de premiers éléments accompagnateurs (32), qui sont opposés aux premiers éléments de poussée (31), sont agencés au-dessus du tambour de fabrication (10), et sont mobiles verticalement de manière à être insérés dans les premiers sièges (13) et accompagnent l'ascension des boîtiers tubulaires (2) à partir des deuxièmes sièges (28).

3. Machine de fabrication (9) selon la revendication 1 ou 2, dans laquelle le premier convoyeur (33) amène les boîtiers tubulaires (2) à réaliser une rotation verticale à 180°.

4. Machine de fabrication (9) selon la revendication 1, 2 ou 3, dans laquelle :
le premier convoyeur (33) comprend une bande transporteuse (34) qui est fermée en une boucle autour de deux poulies d'extrémité et supporte une pluralité de troisièmes sièges (35), chacun conçu pour loger un boîtier tubulaire (2) correspondant ;
la bande transporteuse (34) présente une section rectiligne supérieure, une section rectiligne inférieure et deux segments semi-circulaires qui entourent les deux poulies d'extrémité et relient les deux sections rectilignes l'une à l'autre ; et
la deuxième station de transfert (S10) est agencée le long de la section rectiligne supérieure de la bande transporteuse (34), tandis que la première station de transfert (S9) est agencée le long de la section rectiligne inférieure de la bande transporteuse (34).

5. Machine de fabrication (9) selon la revendication 4, dans laquelle le premier convoyeur (33) comprend une planche latérale (36) semi-circulaire, qui est agencée autour d'une poulie d'extrémité située entre la deuxième station de transfert (S10) et la première station de transfert (S9) et entoure extérieurement la bande transporteuse (34) afin de maintenir les boîtiers tubulaires (2) à l'intérieur des troisièmes sièges (35) correspondants.

6. Machine de fabrication (9) selon la revendication 4 ou 5, dans laquelle, dans la première station de transfert (S9), le tambour d'amenée (25) est agencé au-dessous du premier convoyeur (33) et le deuxième dispositif de transfert (30) comprend :
un groupe de deuxièmes éléments de poussés (37), qui sont agencés dans la première station de transfert (S9) entre les deux branches rectilignes et sont mobiles verticalement de manière à pousser les boîtiers tubulaires (2) à partir des troisièmes sièges (35) vers les deuxièmes sièges (28) ;
et
un groupe de deuxièmes membres accompagnateurs (38), qui sont opposés aux deuxièmes éléments de poussés (37), sont agencés au-dessous du tambour d'amenée (25) et sont mobiles verticalement de manière à être insérés dans les deuxièmes sièges (28) et accompagner la descente des boîtiers tubulaires (2) à partir des troisièmes sièges (35).

7. Machine de fabrication (9) selon l'une quelconque des revendications 1 à 6, dans laquelle le troisième dispositif de transfert (42) comprend : au moins une tête de préhension à aspiration (43) qui est conçue pour maintenir une pluralité de boîtiers tubulaires (2) par le biais de l'aspiration ; et un actionneur (44), qui déplace de manière cyclique la tête de préhension à aspiration (43) entre la deuxième station de transfert (S10) et la troisième station de transfert (S11).

8. Machine de fabrication (9) selon la revendication 7, dans laquelle l'actionneur (44) est conçu pour faire tourner la tête de préhension à aspiration (43) autour d'un troisième axe de rotation vertical (45) pour déplacer de manière cyclique la tête de préhension à aspiration (43) entre la deuxième station de transfert (S10) et la troisième station de transfert (S11) et l'actionneur (44) est conçu pour translater verticalement la tête de préhension à aspiration (43) de manière à baisser et soulever de manière cyclique la tête de préhension à aspiration (43).

9. Machine de fabrication (9) selon l'une quelconque des revendications 1 à 8, dans laquelle l'unité d'amenée (18) comprend :
une première réserve (46), qui est agencée au début du deuxième convoyeur (39), est conçue pour contenir au moins une pile de plateaux (40) pleins et est conçue pour lever et baisser la pile de plateaux (40) pleins de manière à toujours maintenir le plateau (40) plein en haut à la même hauteur verticale que le deuxième convoyeur (39) ; et
une deuxième réserve (47), qui est agencée à la fin du deuxième convoyeur (39), est conçue pour contenir au moins une pile de plateaux (40) vides et est conçue pour lever et baisser la pile de plateaux (40) vides de manière à toujours maintenir le plateau (40) vide en haut à la même hauteur verticale que le deuxième convoyeur (39).

10. Machine de fabrication (9) selon l'une quelconque des revendications 1 à 9, dans laquelle l'unité d'amenée (18) comprend une pince (48), qui est agencée en aval de la troisième station de transfert (S11) et est conçue pour tirer un plateau (40) à l'extérieur de la troisième station de transfert (S11).

11. Machine de fabrication (9) selon l'une quelconque des revendications 1 à 10, dans laquelle le deuxième convoyeur (39) comprend un élément de verrouillage et de centrage (49), qui est agencé au niveau de la troisième station de transfert (S11) et est pourvu d'au moins une broche (50) qui est mobile de manière à être insérée dans un évidement (51) correspondant présent dans chaque plateau (40) se tenant immobile dans la troisième station de transfert (S11).

12. Machine de fabrication (9) selon l'une quelconque des revendications 1 à 11, dans laquelle la première station de transfert (S9) est agencée à approximativement 150°-180° à partir de la station d'amenée (S1) par rapport au deuxième axe de rotation (26).

13. Procédé de fabrication pour la production de cartouches jetables (1) ; chaque cartouche jetable (1) comprenant un boîtier tubulaire (2) et une quantité (4) de produit logé dans le boîtier tubulaire (2) ; le procédé de fabrication comprenant les étapes de : rotation, de manière étagée et autour d'un premier axe de rotation (11) vertical, d'un tambour de fabrication (10), qui supporte au moins un groupe (12) de premiers sièges (13), chacun conçu pour loger un boîtier tubulaire (2) correspondant ;
insertion, au moyen d'une unité d'amenée (18), d'une pluralité de boîtiers tubulaires (2) dans des premiers sièges (13) respectifs du groupe (12) de premiers sièges (13) se tenant immobiles dans une station d'amenée (S1) ;
rotation, de manière étagée et autour d'un deuxième axe de rotation (26) vertical parallèle au premier axe de rotation (11), d'un tambour d'amenée (25), qui supporte au moins un groupe (27) de deuxièmes sièges (28), chacun conçu pour loger un boîtier tubulaire (2) correspondant, et au niveau de la station d'amenée (S1) chevauche partiellement le tambour de fabrication (10), de sorte que, dans la station d'amenée (S1), chaque deuxième siège (28) est aligné verticalement par rapport à un premier siège (13) correspondant ;
transfert des boîtiers tubulaires (2) à partir des deuxièmes sièges (28) vers les premiers sièges (13) au moyen d'un mouvement vertical provoqué par un premier dispositif de transfert (29), qui est agencé dans la station d'amenée (S1) ;
transfert des boîtiers tubulaires (2) vers les deuxièmes sièges (28) au moyen d'un mouvement vertical provoqué par un deuxième dispositif de transfert (30), qui est agencé dans une station de transfert (S9) ; et
réception des boîtiers tubulaires (2) dans une deuxième station de transfert (S10) et libération des boîtiers tubulaires (2) vers les deuxièmes sièges (28) dans la première station de transfert (S9) par un premier convoyeur (33) compris par l'unité d'amenée (18) ;
le procédé de fabrication étant **caractérisé en ce qu'**il comprend les autres étapes de :
amenée, par un deuxième convoyeur (39), à travers une troisième station de transfert (S11), d'une succession de plateaux (40), chacun pourvu d'une pluralité de quatrièmes sièges (41), chacun conçu pour loger un boîtier tubulaire (2) correspondant ; et
prélèvement, par un troisième dispositif de transfert (42), d'une pluralité de boîtiers tubulaires (2) à partir de quatrièmes sièges (41) respectifs d'un plateau (40) se tenant immobiles dans la troisième station de transfert (S11) et libération de la pluralité de boîtiers tubulaires (2) dans des troisièmes sièges (35) respectifs du premier convoyeur (33) se tenant immobiles dans la deuxième station de transfert (S10).
